# EUROPEAN PATENT SPECIFICATION

(11) **EP 4 539 401 B1**
(45) Date of publication and mention of the grant of the patent: **23.09.2026**
(21) Application number: 23857530.2
(22) Date of filing: 29.06.2023
(51) Int. Cl.: H04L 12/28, H04L 67/12, G16Y 10/80, G16Y 20/20, G16Y 40/35, H04L 67/303, H04L 67/00

(54) **ELECTRONIC DEVICE FOR MANAGING INTERNET OF THINGS DEVICE AND OPERATION METHOD THEREFOR**
ELEKTRONISCHE VORRICHTUNG ZUR VERWALTUNG EINER INTERNET-DER-DINGE-VORRICHTUNG UND BETRIEBSVERFAHREN DAFÜR
DISPOSITIF ÉLECTRONIQUE DE GESTION DE DISPOSITIF DE L'INTERNET DES OBJETS ET SON PROCÉDÉ DE FONCTIONNEMENT

(30) Priority: 26.08.2022 KR 20220107618; 14.09.2022 KR 20220115756
(43) Date of publication of application: 16.04.2025
(73) Proprietor: Samsung Electronics Co., Ltd., Suwon-si, Gyeonggi-do 16677 (KR)
(72) Inventor: LEE, Dongwook, Suwon-si, Gyeonggi-do 16677 (KR); PARK, Taejun, Suwon-si, Gyeonggi-do 16677 (KR); JANG, Seokkyu, Suwon-si, Gyeonggi-do 16677 (KR); KANG, Inpyo, Suwon-si, Gyeonggi-do 16677 (KR); KIM, Seokhyun, Suwon-si, Gyeonggi-do 16677 (KR)
(74) Representative: Gulde & Partner
(86) International application number: PCT/KR2023/009169
(87) International publication number: WO 2024/043492

(56) References cited:
- CN-A- 114 285 884
- CN-B- 108 964 989
- KR-A- 20220 083 221
- KR-A- 20220 102 469
- KR-B1- 102 377 045
- US-A1- 2022 261 233
- "Smittestopp − A Case Study on Digital Contact Tracing. Simula SpringerBriefs on Computing", 18 June 2022, SPRINGER, Cham, ISBN: 978-3-031-05465-5, article PER MAGNE FLORVAAG, HENRIK AASEN KJELDSBERG, SEBASTIAN KENJI MITUSCH : "Chapter 2 Smittestopp for Android and iOS", pages: 11 - 27, XP009554547, DOI: 10.1007/978-3-031-05466-2_2

## Description

### [Technical Field]

Embodiments of the disclosure relate to an electronic device for managing IoT (Internet of Things) devices and an operation method therefor .

### [Background Art]

Various services and additional functions provided through electronic devices, such as smartphones, are gradually increasing. In order to increase the utility value of the electronic devices and satisfy the needs of various users, communication service providers or electronic device manufacturers are competitively developing electronic devices capable of providing various functions. Accordingly, various functions provided through electronic devices are also becoming more advanced.

As wireless communication technology develops, devices using artificial intelligence (AI) are being widely introduced. For example, home appliances connected to a network using the IoT (Internet of Things) technology may utilize artificial intelligence. IoT technology may provide intelligent Internet technology services that create new values in human life by collecting and analyzing data generated from devices. IoT technology may be applied to fields such as smart homes, smart buildings, smart cities, smart cars, and smart home appliances through the convergence and combination of existing Internet technologies and various industries.

Prior art document CN114285884A relates to methods and systems for remotely connecting, configuring, managing, replacing, and resetting IoT gateway devices via a device management platform, enabling efficient remote operation and maintenance of both standard and non-standard gateway devices without onsite intervention.

Another prior art document CN108964989B describes methods and devices that enable an IoT smart device to connect to one or more third-party business/service platforms by retrieving "platform direct-connection" configuration data from a device-platform server, then using that data to configure and establish cross-platform interoperability for improved user control and services.

Meanwhile, various home appliances are equipped in homes for the convenience of users, and services are being proposed to make the operation or control of home appliances more convenient by utilizing IoT technology. Home network technology may provide various services to users in the home through the home network. For example, users may control controlled devices (e.g., home appliances with IoT technology applied) constituting the home network using personal electronic devices (e.g., smartphones). Users may receive various services through the controlled devices.

### [Detailed Description of the Invention]

### [Technical Solution]

Embodiments of the disclosure may onboard one or more controlled devices (e.g., IoT devices).

Embodiments of the disclosure may provide an electronic device for onboarding one or more IoT devices to a server through a hub device, and an operation method therefor.

The technical problems that the disclosure seeks to solve are not limited to the above-mentioned problems, and other technical problems not mentioned above will be clearly understood by those skilled in the art from the description of the invention described below.

An electronic device according to an embodiment may include a communication circuit and at least one processor operatively connected to the communication circuit. The at least one processor may be configured to obtain installation data required for a first external electronic device to register at least one second external electronic device with a server. The at least one processor may be configured to perform a first onboarding procedure for registering the first external electronic device with the server through the communication circuit. The at least one processor may be configured to transmit the installation data to the first external electronic device through the communication circuit after performing the first onboarding procedure. The at least one processor may be configured to display an installation guide for onboarding the at least one second external electronic device, based on the installation data. The at least one processor may be configured to receive an onboarding result indicating that the at least one second external electronic device has been onboarded by the first external electronic device from the server through the communication circuit.

A method of operating an electronic device according to an embodiment may include an operation of obtaining installation data required for a first external electronic device to register at least one second external electronic device with a server. The method may include an operation of performing a first onboarding procedure for registering the first external electronic device with the server. The method may include an operation of transmitting the installation data to the first external electronic device after performing the first onboarding procedure. The method may include an operation of displaying an installation guide for onboarding the at least one second external electronic device, based on the installation data. The method may include an operation of receiving an onboarding result indicating that the at least one second external electronic device has been onboarded by the first external electronic device from the server.

A non-transitory computer-readable storage medium may store one or more programs according to an embodiment, wherein the one or more programs may include instructions that cause, when executed by at least one processor of an electronic device, the electronic device to obtain installation data required for a first external electronic device to register at least one second external electronic device with a server, perform a first onboarding procedure for registering the first external electronic device with the server, transmit the installation data to the first external electronic device after performing the first onboarding procedure, display an installation guide for onboarding the at least one second external electronic device, based on the installation data, and receive an onboarding result indicating that the at least one second external electronic device has been onboarded by the first external electronic device from the server.

### [Brief Description of Drawings]

FIG. 1 illustrates an IoT (Internet of Things) system according to an embodiment.
FIG. 2 is a block diagram of an electronic device in a network environment according to various embodiments.
FIG. 3 is a diagram illustrating a network including IoT devices according to an embodiment.
FIG. 4 is a block diagram illustrating an internal configuration of a hub device 330 according to an embodiment.
FIG. 5 is a diagram illustrating a procedure for registering IoT devices according to an embodiment.
FIG. 6 is a flowchart illustrating the operation of an electronic device for registering IoT devices according to an embodiment.
FIG. 7 is a flowchart illustrating the operation of a hub device for registering IoT devices according to an embodiment.
FIG. 8 illustrates an example of a sequence diagram of providing fast connection of IoT devices according to an embodiment.
FIG. 9 is a flowchart illustrating the operation of a hub device for registering IoT devices according to an embodiment.
FIG. 10 illustrates an example of a sequence diagram of providing fast connection of IoT devices according to an embodiment.
FIG. 11 is a sequence diagram illustrating a hub onboarding procedure according to an embodiment.
FIG. 12 is a diagram illustrating an IoT environment including a hub device according to an embodiment.
FIG. 13 is a diagram illustrating an IoT environment not including a hub device according to an embodiment.

### [Mode for Carrying out the Invention]

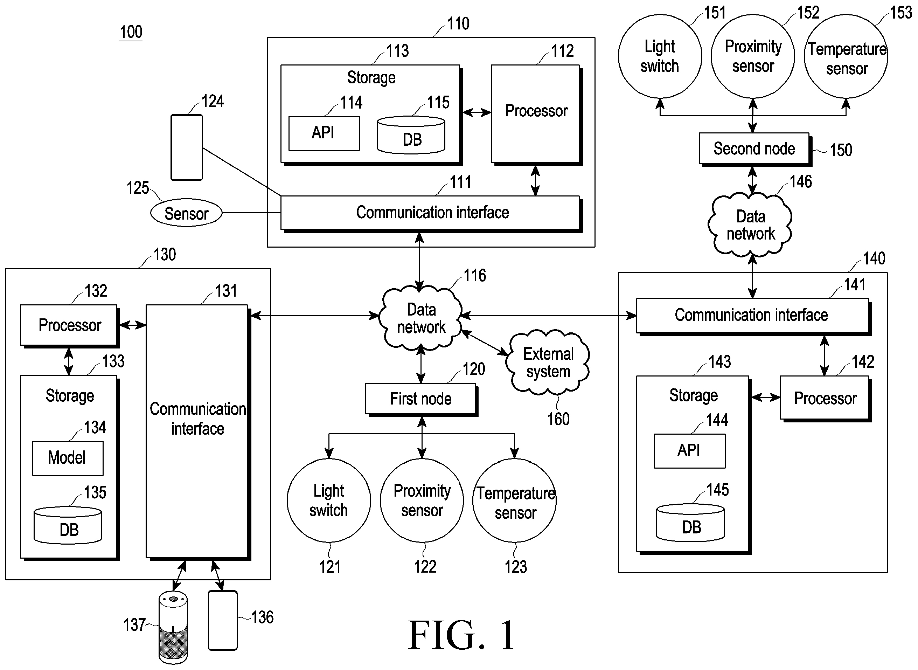

FIG. 1 illustrates an IoT (internet of things) system 100 according to an embodiment. Meanwhile, at least some of the components may be omitted from FIG. 1, and the system may be implemented to include additional components not illustrated.

Referring to FIG. 1, the IoT system 100 according to an embodiment includes a plurality of electronic devices capable of accessing a data network 116 or 146. For example, the IoT system 100 may include at least one of a first IoT server 110, a first node 120, a voice assistance server 130, a second IoT server 140, a second node 150, or devices 121, 122, 123, 124, 125, 136, 137, 151, 152, and 153.

According to an embodiment, the first IoT server 110 may include at least one of a communication interface 111, a processor 112, or a storage unit 113. The second IoT server 140 may include at least one of a communication interface 141, a processor 142, or a storage unit 143. The "IoT server" in this document may remotely control and/or monitor one or more devices (e.g., the devices 121, 122, 123, 124, 125, 151, 152, and 153) via a relay device (e.g., a first node 120 or a second node 150) or directly without a relay device, based on, for example, a data network (e.g., the data network 116 or the data network 146). Here, the "device" indicates, for example, a sensor, a home appliance, an office electronic device, or a device for performing processes, which are disposed (or located) in a local environment such as a home, an office, a factory, a building, an external branch, or other types of sites, and is not limited to a specific type. A device that receives a control command and performs an operation corresponding to the control command may be called a "target device." The IoT server may also be called a central server in that it selects a target device from among a plurality of devices and provides a control command.

According to an embodiment, the first IoT server 110 may communicate with the devices 121, 122, and 123 through the data network 116. The data network 116 may indicate a network for long-distance communication such as the Internet or a computer network (e.g., LAN or WAN), or may include a cellular network.

According to an embodiment, the first IoT server 110 may be connected to the data network 116 through the communication interface 111. The communication interface 111 may include a communication device (or a communication module) for supporting communication in the data network 116, and may be integrated into a single component (e.g., a single chip) or implemented as a plurality of separate components (e.g., multiple chips). The first IoT server 110 may communicate with the devices 121, 122, and 123 through the first node 120. The first node 120 may receive data from the first IoT server 110 through the data network 116 and transmit the received data to at least some of the devices 121, 122, and 123. Alternatively, the first node 120 may receive data from at least some of the devices 121, 122, and 123 and transmit the received data to the first IoT server 110 through the data network 116. The first node 120 may function as a bridge between the data network 116 and the devices 121, 122, and 123. Meanwhile, although one first node 120 is illustrated in FIG. 1, this is merely exemplary, and there is no limitation on the number thereof.

In this document, a "node" may be an edge computing system or a hub device. According to an embodiment, the first node 120 may support wired and/or wireless communication of the data network 116, and may also support wired and/or wireless communication with the devices 121, 122, and 123. For example, the first node 120 may be connected to the devices 121, 122, and 123 through a short-range communication network such as at least one of Bluetooth, Wi-Fi, Wi-Fi direct, Z-wave, Zigbee, INSETEON, X10, or IrDA (infrared data association), but there is no limitation on the type of communication. The first node 120 may be disposed (or located) in an environment such as, a home, an office, a factory, a building, an external branch, or other types of sites. Accordingly, the devices 121, 122, and 123 may be monitored and/or controlled by a service provided by the first IoT server 110, and the devices 121, 122, and 123 may not be required to have the full capability of network communication (e.g., Internet communication) for direct connection to the first IoT server 110. Although the devices 121, 122, and 123 are illustrated as electronic devices implemented in a home environment, such as a light switch, a proximity sensor, a temperature sensor, etc., this is exemplary and the devices are not limited thereto.

According to an embodiment, the first IoT server 110 may support direct communication with the devices 124 and 125. Here, "direct communication" may indicate communication without passing through a relay device, such as the first node 120, for example, communication through a cellular communication network and/or a data network.

According to an embodiment, the first IoT server 110 may transmit a control command to at least some of the devices 121, 122, 123, 124 and 125. Here, the "control command" may indicate data that causes a controllable device to perform a specific operation, and the specific operation is an operation performed by the device, and may include outputting information, sensing information, reporting information, and management (e.g., deletion or generation) of information, and there is no limitation on the type thereof. For example, the processor 112 may obtain information (or a request) for generating a control command from the outside (e.g., at least some of the voice assistant server 130, the second IoT server 140, the external system 160, or the devices 121, 122, 123, 124 and 125) and, based on the obtained information, generate a control command. Alternatively, the processor 112 may generate a control command, based on the monitoring result of at least some of the devices 121, 122, 123, 124 and 125 satisfying a specified condition. The processor 112 may control the communication interface 111 to transmit the control command to the target device.

According to an embodiment, the processor 112, the processor 132, or the processor 142 may be implemented as a combination of one or more of a general-purpose processor such as a central processing unit (CPU), a digital signal processor (DSP), an application processor (AP), or a communication processor (CP), a graphics-only processor such as a graphical processing unit (GPU) or a vision processing unit (VPU), or an artificial intelligence-only processor such as a neural processing unit (NPU). The above-described processing units are merely exemplary, and it will be understood by those skilled in the art that the processor 112 may be configured as any computational means capable of executing instructions stored in memory 113 and outputting the executed results.

According to an embodiment, the processor 112 may configure a web-based interface, based on an API 114, or expose resources managed by the first IoT server 110 to the outside. The web-based interface may support communication between, for example, the first IoT server 110 and an external web service. The processor 112 may allow, for example, the external system 160 to control and/or access the devices 121, 122, and 123. The external system 160 may be, for example, an independent system that is not associated with, or is not part of, the system 100. The external system 160 may be, for example, an external server or a website. However, security is required for access to the devices 121, 122, and 123 or resources of the first IoT server 110 from the external system 160. According to an embodiment, the processor 112 may expose an API endpoint (e.g., a universal resource locator (URL)) based on the API 114 to the outside using an automation application. According to the above, the first IoT server 110 may transmit a control command to a target device among the devices 121, 122, and 123. Meanwhile, the descriptions of the communication interface 141, processor 142, API 144 of the storage unit 143, and database 145 of the second IoT server 140 may be substantially the same as the descriptions of the communication interface 111, processor 112, API 114 of the storage unit 113, and database 115 of the first IoT server 110. In addition, the description of the second node 150 may be substantially the same as the description of the first node 120. The second IoT server 140 may transmit a control command to a target device among the devices 151, 152, and 153. The first IoT server 110 and the second IoT server 140 may be operated by the same service provider in an embodiment, but may be operated by different service providers in another embodiment.

According to an embodiment, the voice assistant server 130 may transmit and receive data to and from the first IoT server 110 through the data network 116. The voice assistant server 130 according to an embodiment may include at least one of a communication interface 131, a processor 132, or a storage unit 133. The communication interface 131 may communicate with a smartphone 136 or an AI speaker 137 through a data network (not shown) and/or a cellular network (not shown). The smartphone 136 or AI speaker 137 may include a microphone, and may obtain a user voice, convert it into a voice signal, and transmit the voice signal to the voice assistant server 130. The processor 132 may receive a voice signal from the smartphone 136 or AI speaker 137 through the communication interface 131. The processor 132 may process the received voice signal, based on a stored model 134. The processor 132, based on the information stored in the database 135, may generate (or identify) a control command using the processing result. According to an embodiment, the storage unit 113, 133, or 143 may include a non-transitory storage medium of at least one of a flash memory type, a hard disk type, a multimedia card micro type, card-type memory (e.g., SD or XD memory, etc.), random access memory (RAM), static random access memory (SRAM), read-only memory (ROM), electrically erasable programmable read-only memory (EEPROM), programmable read-only memory (PROM), magnetic memory, a magnetic disk, or an optical disk, and there is no limitation on the type thereof.

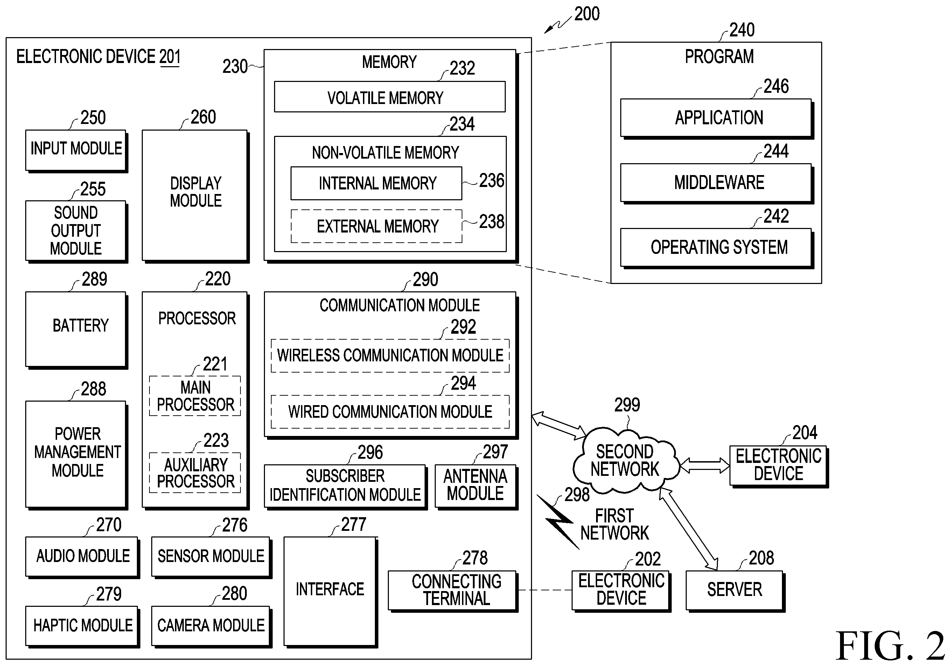

In an embodiment, at least one device (e.g., the device 124) communicating with the first IoT server 110 may be an electronic device (e.g., the electronic device 201 in FIG. 2) within a network environment.

FIG. 2 is a block diagram illustrating an electronic device 201 in a network environment 200 according to various embodiments.

Referring to FIG. 2, the electronic device 201 in the network environment 200 may communicate with an electronic device 202 via a first network 298 (e.g., a short-range wireless communication network), or at least one of an electronic device 204 or a server 208 via a second network 299 (e.g., a long-range wireless communication network). According to an embodiment, the electronic device 201 may communicate with the electronic device 204 via the server 208. According to an embodiment, the electronic device 201 may include a processor 220, memory 230, an input module 250, a sound output module 255, a display module 260, an audio module 270, a sensor module 276, an interface 277, a connecting terminal 278, a haptic module 279, a camera module 280, a power management module 288, a battery 289, a communication module 290, a subscriber identification module (SIM) 296, or an antenna module 297. In some embodiments, at least one of the components (e.g., the connecting terminal 278) may be omitted from the electronic device 201, or one or more other components may be added in the electronic device 201. In some embodiments, some of the components (e.g., the sensor module 276, the camera module 280, or the antenna module 297) may be implemented as a single component (e.g., the display module 260).

The processor 220 may execute, for example, software (e.g., a program 240) to control at least one other component (e.g., a hardware or software component) of the electronic device 201 coupled with the processor 220, and may perform various data processing or computation. According to one embodiment, as at least part of the data processing or computation, the processor 220 may store a command or data received from another component (e.g., the sensor module 276 or the communication module 290) in volatile memory 232, process the command or the data stored in the volatile memory 232, and store resulting data in non-volatile memory 234. According to an embodiment, the processor 220 may include a main processor 221 (e.g., a central processing unit (CPU) or an application processor (AP)), or an auxiliary processor 223 (e.g., a graphics processing unit (GPU), a neural processing unit (NPU), an image signal processor (ISP), a sensor hub processor, or a communication processor (CP)) that is operable independently from, or in conjunction with, the main processor 221. For example, when the electronic device 201 includes the main processor 221 and the auxiliary processor 223, the auxiliary processor 223 may be adapted to consume less power than the main processor 221, or to be specific to a specified function. The auxiliary processor 223 may be implemented as separate from, or as part of the main processor 221.

The auxiliary processor 223 may control at least some of functions or states related to at least one component (e.g., the display module 260, the sensor module 276, or the communication module 290) among the components of the electronic device 201, instead of the main processor 221 while the main processor 221 is in an inactive (e.g., sleep) state, or together with the main processor 221 while the main processor 221 is in an active state (e.g., executing an application). According to an embodiment, the auxiliary processor 223 (e.g., an image signal processor or a communication processor) may be implemented as part of another component (e.g., the camera module 280 or the communication module 290) functionally related to the auxiliary processor 223. According to an embodiment, the auxiliary processor 223 (e.g., the neural processing unit) may include a hardware structure specified for artificial intelligence model processing. An artificial intelligence model may be generated by machine learning. Such learning may be performed, e.g., by the electronic device 201 where the artificial intelligence is performed or via a separate server (e.g., the server 208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 230 may store various data used by at least one component (e.g., the processor 220 or the sensor module 276) of the electronic device 201. The various data may include, for example, software (e.g., the program 240) and input data or output data for a command related thereto. The memory 230 may include the volatile memory 232 or the non-volatile memory 234.

The program 240 may be stored in the memory 230 as software, and may include, for example, an operating system (OS) 242, middleware 244, or an application 246.

The input module 250 may receive a command or data to be used by another component (e.g., the processor 220) of the electronic device 201, from the outside (e.g., a user) of the electronic device 201. The input module 250 may include, for example, a microphone, a mouse, a keyboard, a key (e.g., a button), or a digital pen (e.g., a stylus pen).

The sound output module 255 may output sound signals to the outside of the electronic device 201. The sound output module 255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 260 may visually provide information to the outside (e.g., a user) of the electronic device 201. The display module 260 may include, for example, a display, a hologram device, or a projector and control circuitry to control a corresponding one of the display, hologram device, and projector. According to an embodiment, the display module 260 may include a touch sensor adapted to detect a touch, or a pressure sensor adapted to measure the intensity of force incurred by the touch.

The audio module 270 may convert a sound into an electrical signal and vice versa. According to an embodiment, the audio module 270 may obtain the sound via the input module 250, or output the sound via the sound output module 255 or a headphone of an external electronic device (e.g., an electronic device 202) directly (e.g., wiredly) or wirelessly coupled with the electronic device 201.

The sensor module 276 may detect an operational state (e.g., power or temperature) of the electronic device 201 or an environmental state (e.g., a state of a user) external to the electronic device 201, and then generate an electrical signal or data value corresponding to the detected state. According to an embodiment, the sensor module 276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 277 may support one or more specified protocols to be used for the electronic device 201 to be coupled with the external electronic device (e.g., the electronic device 202) directly (e.g., wiredly) or wirelessly. According to an embodiment, the interface 277 may include, for example, a high definition multimedia interface (HDMI), a universal serial bus (USB) interface, a secure digital (SD) card interface, or an audio interface.

A connecting terminal 278 may include a connector via which the electronic device 201 may be physically connected with the external electronic device (e.g., the electronic device 202). According to an embodiment, the connecting terminal 278 may include, for example, a HDMI connector, a USB connector, a SD card connector, or an audio connector (e.g., a headphone connector).

The haptic module 279 may convert an electrical signal into a mechanical stimulus (e.g., a vibration or a movement) or electrical stimulus which may be recognized by a user via his tactile sensation or kinesthetic sensation. According to an embodiment, the haptic module 279 may include, for example, a motor, a piezoelectric element, or an electric stimulator.

The camera module 280 may capture a still image or moving images. According to an embodiment, the camera module 280 may include one or more lenses, image sensors, image signal processors, or flashes.

The power management module 288 may manage power supplied to the electronic device 201. According to one embodiment, the power management module 288 may be implemented as at least part of, for example, a power management integrated circuit (PMIC).

The battery 289 may supply power to at least one component of the electronic device 201. According to an embodiment, the battery 289 may include, for example, a primary cell which is not rechargeable, a secondary cell which is rechargeable, or a fuel cell.

The communication module 290 may support establishing a direct (e.g., wired) communication channel or a wireless communication channel between the electronic device 201 and the external electronic device (e.g., the electronic device 202, the electronic device 204, or the server 208) and performing communication via the established communication channel. The communication module 290 may include one or more communication processors that are operable independently from the processor 220 (e.g., the application processor (AP)) and supports a direct (e.g., wired) communication or a wireless communication. According to an embodiment, the communication module 290 may include a wireless communication module 292 (e.g., a cellular communication module, a short-range wireless communication module, or a global navigation satellite system (GNSS) communication module) or a wired communication module 294 (e.g., a local area network (LAN) communication module or a power line communication (PLC) module). A corresponding one of these communication modules may communicate with the external electronic device via the first network 298 (e.g., a short-range communication network, such as BluetoothTM, wireless-fidelity (Wi-Fi) direct, or infrared data association (IrDA)) or the second network 299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 292 may identify and authenticate the electronic device 201 in a communication network, such as the first network 298 or the second network 299, using subscriber information (e.g., international mobile subscriber identity (IMSI)) stored in the subscriber identification module 296.

The wireless communication module 292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 292 may support a high-frequency band (e.g., the mmWave band) to achieve, e.g., a high data transmission rate. The wireless communication module 292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 292 may support various requirements specified in the electronic device 201, an external electronic device (e.g., the electronic device 204), or a network system (e.g., the second network 299). According to an embodiment, the wireless communication module 292 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 297 may transmit or receive a signal or power to or from the outside (e.g., the external electronic device) of the electronic device 201. According to an embodiment, the antenna module 297 may include an antenna including a radiating element composed of a conductive material or a conductive pattern formed in or on a substrate (e.g., a printed circuit board (PCB)). According to an embodiment, the antenna module 297 may include a plurality of antennas (e.g., array antennas). In such a case, at least one antenna appropriate for a communication scheme used in the communication network, such as the first network 298 or the second network 299, may be selected, for example, by the communication module 290 (e.g., the wireless communication module 292) from the plurality of antennas. The signal or the power may then be transmitted or received between the communication module 290 and the external electronic device via the selected at least one antenna. According to an embodiment, another component (e.g., a radio frequency integrated circuit (RFIC)) other than the radiating element may be additionally formed as part of the antenna module 297.

According to various embodiments, the antenna module 297 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 201 and the external electronic device 204 via the server 208 coupled with the second network 299. Each of the electronic devices 202 or 204 may be a device of a same type as, or a different type, from the electronic device 201. According to an embodiment, all or some of operations to be executed at the electronic device 201 may be executed at one or more of the external electronic devices 202, 204, or 208. For example, if the electronic device 201 should perform a function or a service automatically, or in response to a request from a user or another device, the electronic device 201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 201. The electronic device 201 may provide the outcome, with or without further processing of the outcome, as at least part of a reply to the request. To that end, a cloud computing, distributed computing, mobile edge computing (MEC), or client-server computing technology may be used, for example. The electronic device 201 may provide ultra low-latency services using, e.g., distributed computing or mobile edge computing. In another embodiment, the external electronic device 204 may include an internet-of-things (IoT) device. The server 208 may be an intelligent server using machine learning and/or a neural network. According to an embodiment, the external electronic device 204 or the server 208 may be included in the second network 299. The electronic device 201 may be applied to intelligent services (e.g., smart home, smart city, smart car, or healthcare) based on 5G communication technology or IoT-related technology.

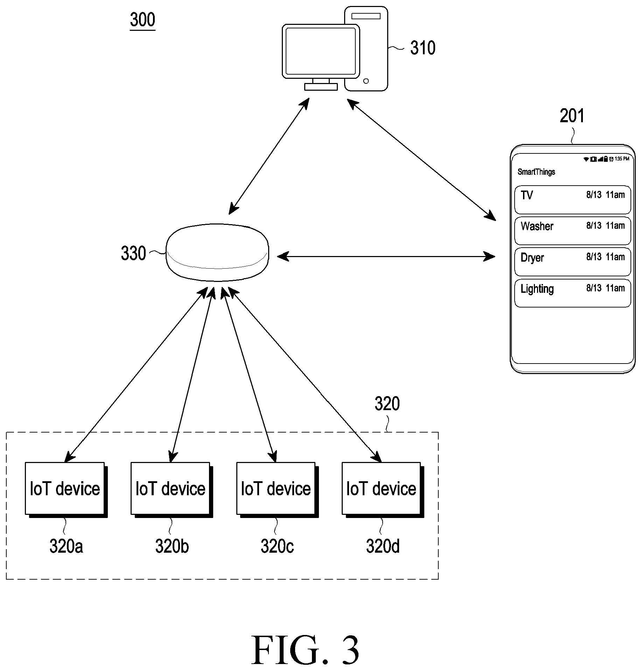

FIG. 3 is a diagram illustrating a network including IoT devices according to an embodiment.

Referring to FIG. 3, the network 300 may include a server 310 operating as an IoT cloud, an electronic device 201 communicating with the server 310 through network communication (e.g., the Internet), and one or more external electronic devices 320 (e.g., IoT devices 320a, 320b, 320c, and 320d) supporting IoT technology. In an embodiment, one or more IoT devices 320 may include at least one small things device (e.g., a sensor device) that may operate with a battery. In an embodiment, at least one IoT device 320 (e.g., a small things device) may use a low-power communication protocol, such as Zigbee, Z-wave, and/or Bluetooth low energy (BLE), instead of using Wi-Fi or Ethernet, which consumes a lot of power, for Internet connection.

In an embodiment, at least one IoT device 320 (e.g., a small things device) is unable to directly access network communication (e.g., Internet) through low-power communication protocol (e.g., Zigbee, Z-wave, and/or BLE), and may be connected to network communication through a first external electronic device (e.g., the hub device 330) that relays communication between the low-power communication protocol and network communication. The hub device 330 may support a connection between at least one IoT device 320 and the electronic device 201 and/or a connection between at least one IoT device 320 and the server 310. In an embodiment, the electronic device 201 may communicate with at least one IoT device 320 through the hub device 330, through the server 310, through long-range wireless communication (e.g., the second network 299), or through short-range wireless communication (e.g., the first network 298).

In an embodiment, at least one IoT device 320 may be controlled (e.g., to report status and/or perform specific functions) by a remote command (e.g., a control command of the electronic device 201), and may include, for example, at least one of a television, an air conditioner, a refrigerator, a washing machine, a bulb device, a security camera, a sensor, or a window treatment. In an embodiment, one or more IoT devices 320 may include a plurality of IoT devices (e.g., sensor devices) configured as a package (e.g., the package 500) together with the hub device 330.

In an embodiment, at least one IoT device 320 may communicate with the electronic device 201 and/or the server 310 through the hub device 330. In an embodiment, at least one IoT device 320 may be configured to communicate with the hub device 330 and/or the electronic device 201 through long-range wireless communication (e.g., the second network 299) or through short-range wireless communication (e.g., the first network 298). In an embodiment, if at least one IoT device 320 is a small things device, at least one IoT device 320 may be connected to the hub device 330 through a low-power communication protocol and may be configured to communicate with the server 310 and/or the electronic device 201 through the hub device 330.

In an embodiment, the electronic device 201 may be a personal electronic device, such as a smartphone, a tablet, or a wearable device or an electronic device having a display and a user interface, such as a television or a control console. The electronic device 201 may discover the hub device 330 and execute a first onboarding procedure (e.g., a hub onboarding procedure) to authenticate the discovered hub device 330 and register it with the server 310. After being registered with the server 310, the hub device 330 may perform a second onboarding procedure (e.g., a device onboarding procedure) to authenticate at least one IoT device 320 and register it with the server 310 to be associated with a user account. The electronic device 201 may monitor, configure, and control at least one IoT device 320 registered with the server 310 using the user account.

In an embodiment, the electronic device 201 may identify the status of at least one IoT device 320 that the user is to use for the IoT control service or control (e.g., transmit a control command instructing to execute a specific function to) at least one IoT device 320. In an embodiment, the electronic device 201 may be an owner device included in the network 300. In an embodiment, although not shown, at least one member device including at least some functions and/or authority of the electronic device 201 may be included in the network 300. In an embodiment, the member device may not execute an onboarding procedure for the hub device 330 and/or at least one IoT device 320, but may execute a function of identifying or controlling the status of at least one IoT device 320 registered with the server 310.

In an embodiment, the hub device 330 is an electronic device that operates an IoT control service, and may be a server or gateway disposed within a building (home or hotel), or a remote server disposed outside the building. In an embodiment, the hub device 330 may be a home appliance such as a smartphone, tablet, personal computer (PC), or TV having a hub function. The hub device 330 may execute a second onboarding procedure (e.g., a device onboarding procedure) for registering at least one IoT device 320 with the server 310 according to at least one of the embodiments described below.

In an embodiment, in the case where at least one IoT device 320 is a sensor device, at least one IoT device 320 may report collected sensor data to the server 310 through the hub device 330 according to a designated event (e.g., periodically or when a designated condition is satisfied). In an embodiment, at least one IoT device 320 may execute an operation corresponding to a control command transmitted by the electronic device 201 through the hub device 330 or through the server 310 and the hub device 330. In an embodiment, it may receive, through the hub device 330, a control command generated by the server 310 according to a designated automation rule and execute an operation corresponding to the control command.

In an embodiment, the hub device 330 may be connected to at least one IoT device 320 using a low-power communication protocol (e.g., Zigbee, Z-wave, and/or BLE) and may transmit information (e.g., sensor data) received from at least one IoT device 320 to the server 310. In an embodiment, the hub device 330 may interpret information (e.g., sensor data or a request) received from at least one IoT device 320 and operate according to the interpretation result.

In an embodiment, the electronic device 201 may include an application (e.g., an IoT application) for communicating with the hub device 330 and/or at least one IoT device 320, and display information (e.g., sensor data and/or status) collected by at least one IoT device 320 by executing the IoT application on a display module (e.g., the display module 260). In an embodiment, the electronic device 201 may transmit a control command input from a user through the IoT application to at least one IoT device 320 through the server 310 and the hub device 330.

In an embodiment, the server 310 may store status information of at least one IoT device 320 connected through the hub device 330 and provide the status information to the electronic device 201. In an embodiment, the server 310 may transmit a control command received from the electronic device 201 to at least one IoT device 320 through the hub device 330. In an embodiment, the server 310 may store at least one automation rule for at least one IoT device 320, generate a control command according to the at least one automation rule, and transmit it to at least one IoT device 320 through the hub device 330.

In an embodiment, the electronic device 201 may perform a first onboarding procedure (e.g., a hub onboarding procedure) of installing an IoT application for the user to identify and configure at least one IoT device 320 and registering the hub device 330 with the server 310 through the IoT application. After the hub device 330 is registered, the electronic device 201 may receive an onboarding result of at least one IoT device 320 registered on the server 310 from the server 310 through the hub onboarding procedure, thereby identifying, configuring, and controlling at least one IoT device 320 through the IoT application.

The electronic device 201 may display a catalog that provides at least one IoT device 320 connectable through the IoT application in order to identify at least one IoT device 320 through the IoT application, and may receive, from the user, a user input for selecting at least one IoT device 320 (e.g., the IoT device 320a) desired to be connected from the catalog. In response to the user input, the electronic device 201 may display an installation guide that causes the IoT device 320a to enter a connection mode (e.g., a setup mode).

The installation guide may include at least one piece of guide information requesting to capture a machine-readable indicator (e.g., a quick response (QR) code or barcode) of the IoT device 320a through a camera (e.g., the camera module 280) of the electronic device 201, guide information requesting to press a designated button of the IoT device 320a, guide information requesting to mount a battery to the IoT device 320a, or guide information requesting to turn on the power of the IoT device 320a.

The electronic device 201 may capture a QR code of the IoT device 320a through the camera (e.g., the camera module 280), obtain connection information (e.g., an installation code to be used for connection with the IoT device 320a) from the QR code, and transmit the connection information to the hub device 330. In an embodiment, the installation code may include a security key to be used by the hub device 330 to onboard the IoT device 320a. The hub device 330 may establish a connection (e.g., a Zigbee connection, a Z-wave connection, or a BLE connection) with the IoT device 320a, based on the connection information.

When the connection with the IoT device 320a is established, the hub device 330 may request the server 310 to generate a device record for the IoT device 320a and synchronize the information (e.g., a device ID and/or model name) of the IoT device 320a with the server 310, thereby performing a device onboarding procedure for the IoT device 320a. After the device onboarding procedure is completed, the electronic device 201 may receive an onboarding result of the IoT device 320a from the server 310 and display information notifying that the connection of the IoT device 320a is completed through the IoT application.

In an embodiment, the hub device 330 and at least one IoT device 320 may be manufactured and sold as a package (e.g., the package 500) such as a starter kit or bundle set. One or more IoT devices 320 in the package may include multiple IoT devices, and in order to register the IoT devices one by one with the server 310 according to the procedure described above, it may be inconvenient to scan the QR codes of the respective IoT devices one by one through the electronic device 201.

The embodiments of the disclosure enable the user to simply and conveniently connect IoT devices packaged together with the hub device 330 to an IoT environment (e.g., an IoT application of the electronic device 201) in order to build an IoT environment. The embodiments of the disclosure enable the user to omit the complex procedure of operating and connecting the hub device 330 and the IoT devices when manufacturing a package including the hub device 330 and the IoT devices, thereby improving production and packaging efficiency. The embodiments of the disclosure may reduce inconvenience for manufacturers and users in registering multiple IoT devices on an IoT application.

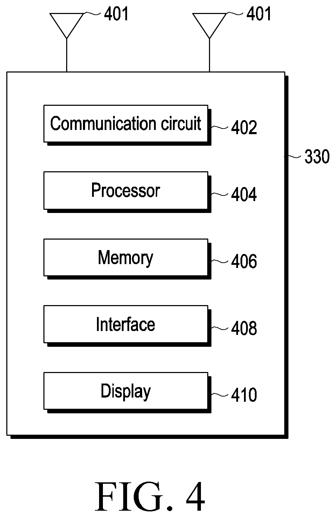

FIG. 4 is a block diagram illustrating an internal configuration of a hub device 330 according to an embodiment.

Referring to FIG. 4, the hub device 330 may be configured to connect at least one external electronic device (e.g., at least one IoT device 320) to the server 310 through network communication (e.g., the Internet) to implement an IoT service (e.g., an event-based IoT service) in a wireless communication network (e.g., an IoT network). For example, the IoT network may be a smart home network, and the IoT service may be an automation service. The hub device 330 may include a communication circuit 402, a processor 404, memory 406, an interface 408, and/or a display 410.

In an embodiment, at least one of the communication circuit 402, the processor 404, the memory 406, the interface 408, or the display 410 may be implemented similarly or substantially identically to the communication module 290, the processor 220, the memory 230, the interface 277, or the display module 260 described in FIG. 2, respectively.

In an embodiment, the hub device 330 may be a device that supports Zigbee, Z-Wave, Wi-Fi, Bluetooth Classic, and/or Bluetooth low energy (BLE). The hub device 330 may include a communication circuit 402 that transmits and receives signals to and from at least one IoT device 320, the server 310, or the electronic device 201 using one or more antennas 401.

According to an embodiment, the communication circuit 402 may include one or more communication circuits (e.g., the communication module 290 in FIG. 2), and the one or more communication circuits may include communication circuits based on Zigbee, Z-Wave, Wi-Fi, Bluetooth Classic, and/or BLE. According to an embodiment, the hub device 330 may include separate communication circuits based on Zigbee, Z-Wave, Wi-Fi, Bluetooth Classic, and/or BLE, respectively, or may include at least one communication circuit based on at least one or a combination of Zigbee, Z-Wave, Wi-Fi, Bluetooth Classic, and/or BLE.

The hub device 330 may include an interface 408 (e.g., the interface 277 in FIG. 2) that provides a wired and/or wireless interface for communicating with external components. In an embodiment, at least some of one or more antennas 401, the communication circuits 402, or the interface 408 may be implemented as at least a part of the communication module 290 and antenna module 298 in FIG. 2.

The hub device 330 may include a processor 404 (e.g., the processor 220 in FIG. 2) that may be implemented as one or more single-core processors or one or more multi-core processors, and memory 406 (e.g., the memory 230 in FIG. 2) that stores instructions for the operation of the hub device 330.

According to an embodiment, the memory 406 may store images for providing a user interface (UI) related to the IoT application and a UI, user information, documents, databases, or related data. According to an embodiment, the display 410 (e.g., the display module 260 in FIG. 2) may display a UI related to the IoT application when the IoT application is executed under the control of the processor 404.

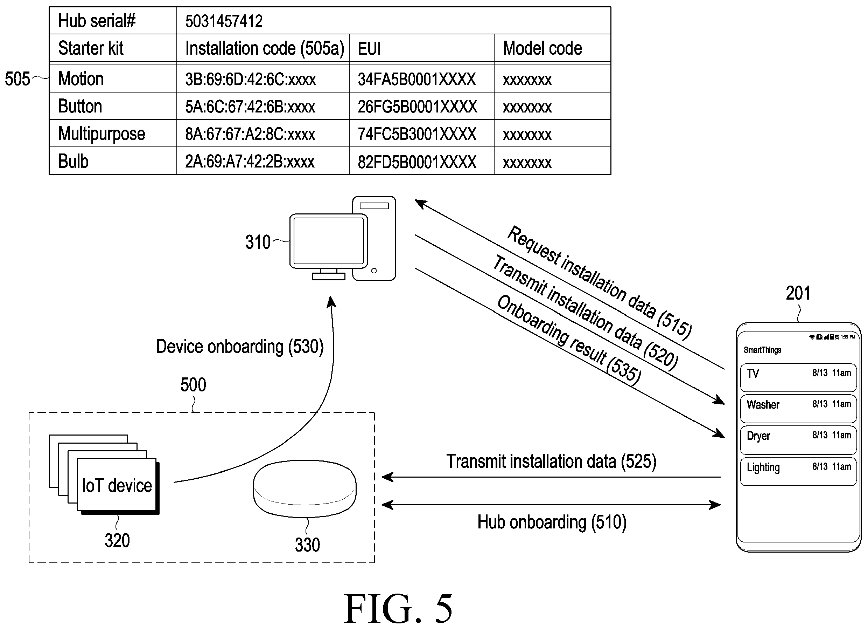

FIG. 5 is a diagram illustrating a procedure for registering IoT devices according to an embodiment.

Referring to FIG. 5, the server 310 may store installation data 505 required for onboarding at least one IoT device 320. In an embodiment, the server 310 may obtain and store installation data 505 from a manufacturer that manufactures a package 500 including at least one IoT device 320 and the hub device 330. In an embodiment, at the time of manufacturing or selling the package 500 including at least one IoT device 320 and the hub device 330, an engineer may obtain at least one of a photo of the hub device 330, a QR code of at least one IoT device 320, or a serial number of the hub device 330, and register the obtained information with the server 310, for example, through the web. The server 310 may configure installation data 505, based on the obtained information. In an embodiment, the obtained information may include all information necessary to configure the installation data 505. In an embodiment, the server 310 may collect at least some information necessary to configure the installation data 505 from, for example, a manufacturer server (not shown), based on the obtained information.

In an embodiment, the installation data 505 may include at least one piece of hub information related to the hub device 330 or device information related to each of the one or more IoT devices 320. In an embodiment, the hub information may include at least one of a hub serial number (SN), a hub ID, or a hub model name. In an embodiment, the device information may include at least one of a device model name (e.g., "motion", "button", "multipurpose", or "bulb"), a device model code, a device ID, or an installation code 505a. In an embodiment, the device ID may include a device EUI (extended unique identifier), and the device EUI may be a 64-bit globally-unique value assigned to the manufacturer, the owner, or each IoT device. In an embodiment, the installation code 505a may include a security key used for encrypted communication according to a communication protocol (e.g., Zigbee, Z-wave, or BLE) used between each IoT device 320 and the hub device 330. The hub device 330 may onboard each IoT device 320 using the above installation code 505a.

Table 1 below shows an example of installation data 505.

**[Table 1]**

| | | | |
|---|---|---|---|
| Package ID | StarterKit-000001 | | |
| Package Model Name | Model-01 | | |
| Hub Serial Number | 12345678 | | |
| Hub Model Name | IM6001-Vxxxx | | |

| Device Model Code | Device Model Name | Device EUI | Device Installation Code |
|---|---|---|---|
| Xxx01 | Motion | 12AB34CD0001xxx | 12-34-56-78-xxxx |
| Xxx02 | Button | 12AB34CD0001xxx | 12-34-56-78-xxxx |
| Xxx03 | Bulb | 12AB34CD0001xxx | 12-34-56-78-xxxx |
| Xxx04 | Outlet | 12AB34CD0001xxx | 12-34-56-78-xxxx |
| Xxx05 | Switch | 12AB34CD0001xxx | 12-34-56-78-xxxx |

Referring to Table 1 above, the installation data 505 may include at least one of the following fields.
- Package ID: An ID uniquely assigned to a package 500 including at least one IoT device 320 and the hub device 330, which may be, for example, "StarterKit-000001".
- Package model name: A product model name of a package 500 including at least one IoT device 320 and the hub device 330, which may be, for example, "Model-01".
- Hub serial number: A unique serial number of the hub device 330, which may be, for example, "12345678".
- Hub model name: A model name of the hub device 330, which may be, for example, "IM6001-Vxxxx".
- Device model code: A model code of each IoT device 320, which may be, for example, "Xxx01".
- Device model name: A model name of each IoT device 320, which may be, for example, "Motion", "Button", "Bulb", "Outlet", or "Switch".
- Device EUI: A unique ID of each IoT device 320, which may be, for example, "12AB34CD0001xxx".
- Device installation code (e.g., the installation code 505a): A security key of each IoT device 320 used during device onboarding (e.g., operation 530), in which the length, format, and usage method may be determined depending on the protocol (e.g., Zigbee, Z-wave, or BLE) used. For example, the device installation code may be "12-34-56-78-xxxx". The device installation code of the IoT device 320 may vary or be the same among the respective IoT devices 320.

In an embodiment, the installation data 505 may include at least a hub serial number, a device ID, and an installation code 505a. In an embodiment, since packages 500 of the same model may include hub devices (e.g., the hub device 330) and IoT devices (e.g., the IoT device 320) of the same model, the installation data 505 may include the package model name but may not include the hub model name and/or the device model name(s).

In an embodiment, the server 310 may obtain and store the installation data 505 from a seller or a computer in a store that sells the package 500 including the hub device 330 and at least one IoT device. In an embodiment, at the time of selling the package 500 including at least one IoT device 320 and the hub device 330, the seller, the user purchasing the package, or an agent may obtain at least one of a photo of the hub device 330, a QR code of at least one IoT device 320, or a serial number of the hub device 330, and may register the obtained information with the server 310 through, for example, the web. In an embodiment, the obtained information may include all information necessary to configure installation data 505. In an embodiment, the server 310 may collect at least some information necessary to configure installation data 505 from, for example, a manufacturer server (not shown), based on the obtained information.

In operation 510, the electronic device 201 may perform a first onboarding procedure (e.g., a hub onboarding procedure) to register the hub device 330 with the server 310. In an embodiment, the hub onboarding procedure in operation 510 may be performed, for example, at least before operation 525.

In operation 515, the electronic device 201 may transmit, to the server 310, a request message requesting installation data 505 related to the package 500 including the hub device 330 and at least one IoT device 320. In an embodiment, the electronic device 201 may request installation data 505, based on the serial number of the hub device 330 or the package ID of the package 500. In an embodiment, the electronic device 201 may obtain the serial number of the hub device 330 from the QR code of the hub device 330 or from the server (e.g., the server 310). In an embodiment, the electronic device 201 may obtain the package ID from the QR code of the package 500 or obtain the package ID printed (or attached) on the package 500 through, for example, user input. In operation 520, the server 310 may transmit installation data 505 to the electronic device 201 in response to the request message.

In operation 525, the electronic device 201 may transmit the installation data 505 to the hub device 330. In an embodiment, the hub device 330 may be registered with the server 310 by establishing a connection (e.g., a Wi-Fi connection, a Bluetooth connection, or a BLE connection) with the electronic device 201 and performing the hub onboarding procedure in operation 510 through the electronic device 201, and the electronic device 201 may transmit the installation data 505 to the hub device 330 through the connection. In an embodiment, the electronic device 201 may establish a new connection for transmitting the installation data 505 while recognizing the hub device 330 through the hub onboarding procedure in operation 510.

In operation 530, the hub device 330 may perform a device onboarding procedure for each of the one or more IoT devices 320 using the installation data 505. In an embodiment, the hub device 330 may establish a connection with at least one IoT device 320 using the installation code 505a for at least one IoT device 320 included in the installation data 505, and perform a device onboarding procedure so that at least one IoT device 320 may be registered with the server 310 through the connection. Through the device onboarding procedure, the server 310 may identify at least one IoT device 320 and store its device information.

In operation 535, the electronic device 201 may receive, from the server 310, an onboarding result indicating that onboarding of at least one IoT device 320 has been completed and provide the user with a notification message indicating that at least one IoT device 320 has been registered through the IoT application. In an embodiment, the server 310 may recognize that onboarding of all IoT devices included in the installation data 505 has been completed based on the installation data 505 and transmit the onboarding result to the electronic device 201.

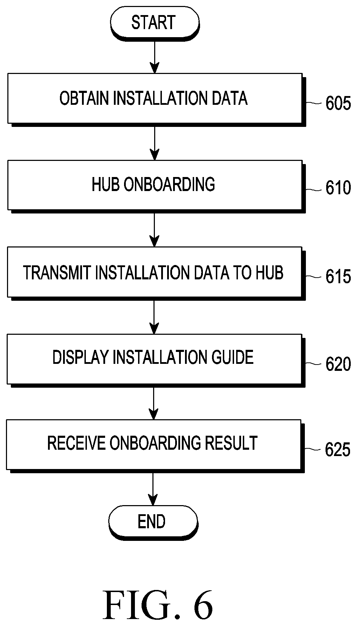

FIG. 6 is a flowchart illustrating the operation of an electronic device for registering IoT devices according to an embodiment. At least one of the operations described below may be executed by the processor 220 of the electronic device 201. Depending on embodiments, at least one of the operations described below may be omitted, modified, or changed in order.

Referring to FIG. 6, in operation 605, the electronic device 201 (e.g., the processor 220) may obtain installation data (e.g., the installation data 505) related to a first external electronic device (e.g., the hub device 330). In an embodiment, the installation data 505 may include an installation code (e.g., the installation code 505a) for at least one second external electronic device (e.g., at least one IoT device 320) connectable to the hub device 330. In an embodiment, the electronic device 201 (e.g., the processor 220), based on a user account and identification information (e.g., a hub serial number and/or a hub MAC (media access control) address) of the hub device 330 or identification information (e.g., the package ID) of a package (e.g., the package 500) including the hub device 330 and at least one IoT device 320, may request the installation data 505 from the server 310 and receive the installation data 505 from the server 310.

In an embodiment, the electronic device 201 (e.g., the processor 220) may obtain installation data 505, based on a machine-readable indicator (e.g., a QR code or bar code) of the package 500 including the hub device 330 and the IoT device 320. For example, a QR code may be printed or attached to the surface of the hub device 330 or the surface of the package 500, and the electronic device 201 (e.g., the processor 220) may capture the QR code to obtain a URL address (e.g., an IP address of the server 310) and access the URL address, thereby obtaining the installation data 505 (or at least some of the installation data). In an embodiment, at least some of the installation data 505 may be stored in the hub device 330, and the electronic device 201 (e.g., the processor 220) may receive at least some (e.g., an installation guide) of the installation data 505 from the hub device 330.

In operation 610, the electronic device 201 (e.g., the processor 220) may execute a hub onboarding procedure to register the hub device 330 with the server 310. In an embodiment, the electronic device 201 (e.g., the processor 220) may obtain identification information (e.g., a serial number) of the hub device 330 from a machine-readable indicator (e.g., a QR code or bar code) of the hub device 330 and establish a connection (e.g., a Wi-Fi connection or a BLE connection) with the hub device 330, based on the identification information. The electronic device 201 (e.g., the processor 220) may authenticate the hub device 330 through the connection and provide the hub device 330 with connection information to be used for connecting to the server 310. The hub device 330 may establish a connection with the server 310, based on the connection information, and be registered with the server 310 through the connection.

In operation 615, the electronic device 201 (e.g., the processor 220) may transmit the installation data 505 obtained in operation 605 to the hub device 330. In an embodiment, the electronic device 201 (e.g., the processor 220) may identify that the hub onboarding procedure for the hub device 330 has been completed and transmit the installation data 505 using the connection established between the hub device 330. In an embodiment, the electronic device 201 (e.g., the processor 220) may re-establish a connection with the hub device 330 for the installation data 505 and transmit the installation data 505 to the hub device 330.

In an embodiment, the hub device 330 may perform a device onboarding procedure for at least one IoT device 320 in response to receiving the installation data 505. In an embodiment, although not shown, the electronic device 201 (e.g., the processor 220) may transmit an onboarding command to the hub device 330 through the server 310 or directly to request that the hub device 330 perform a device onboarding procedure for at least one IoT device 320. In an embodiment, the electronic device 201 (e.g., the processor 220) may transmit the onboarding command to the hub device 330 according to user input. In an embodiment, the hub device 330 may perform a device onboarding procedure for at least one IoT device 320 in response to the onboarding command.

In operation 620, the electronic device 201 (e.g., the processor 220) may display an installation guide for at least one IoT device 320 through a display module (e.g., the display module 260), based on the installation data 505. In an embodiment, the installation guide may include a message (e.g., at least one of a text, an image, a voice, or a sound) that guides a user operation (e.g., scanning a QR code, pressing a designated button, or mounting a battery) required for each IoT device 320. At least one IoT device 320 may enter a setup mode in response to the user operation based on the installation guide, and may be onboarded onto the server 310 by the hub device 330 that received the installation data in operation 615.

In operation 625, the electronic device 201 (e.g., the processor 220) may receive, from the server 310, an onboarding result indicating that the device onboarding procedure for at least one IoT device 320 has been completed. In an embodiment, the onboarding result may include information indicating that the device onboarding procedure for all IoT devices 320 included in the package 500 or at least some of them has been completed. In an embodiment, the electronic device 201 (e.g., the processor 220) may display information (e.g., a device name or image) of at least one IoT device 320, which has been onboarded, through a display module (e.g., the display module 260) according to the onboarding result.

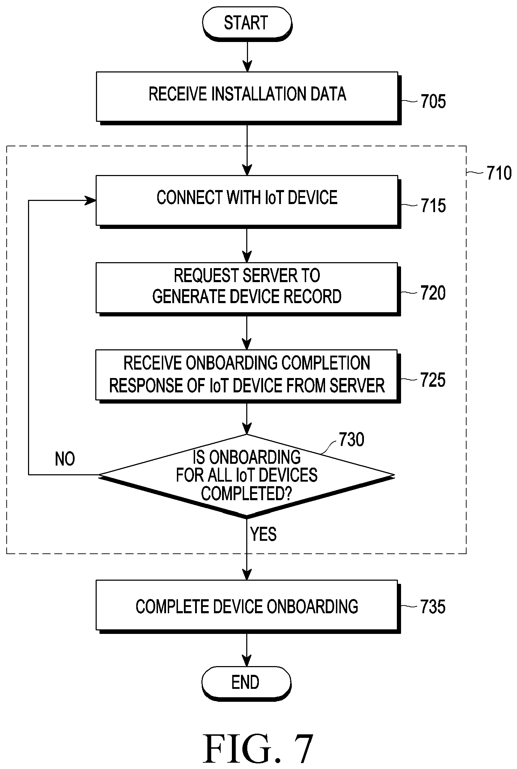

FIG. 7 is a flowchart illustrating the operation of a hub device for registering IoT devices according to an embodiment. At least one of the operations described below may be executed by the processor 404 of the hub device 330. Depending on embodiments, at least one of the operations described below may be omitted, modified, or changed in order.

Referring to FIG. 7, in operation 705, the hub device 330 (e.g., the processor 404) may receive installation data (e.g., the installation data 505) for at least one external electronic device (e.g., the IoT device 320) from the electronic device 201. In an embodiment, the hub device 330 has completed a hub onboarding procedure and may receive the installation data 505 through a connection (e.g., a Wi-Fi connection or a BLE connection) with the electronic device 201. The hub device 330 (e.g., the processor 404) may obtain an installation code (e.g., the installation code 505a) for each IoT device 320 from the installation data 505.

In operation 710, the hub device 330 (e.g., the processor 404), based on the installation data 505, may perform a device onboarding procedure for each IoT device 320 included in the installation data 505. In an embodiment, operation 710 may include at least one of operation 715, operation 720, operation 725, or operation 730. In an embodiment, the installation data 505 may include device identification information (e.g., at least one of a device ID, a serial number, a MAC address, a model name, or a model code) and an installation code (e.g., the installation code 505a) of at least one IoT device 320 connectable to the hub device 330. In an embodiment, the hub device 330 may perform a device onboarding procedure in operation 710 in response to receiving the installation data 505. Although not illustrated, in an embodiment, the hub device 330 may perform the device onboarding procedure in operation 710 in response to an onboarding command received through the server 310 or directly from the electronic device 201.

In operation 715, the hub device 330 (e.g., the processor 404) may establish a connection with one IoT device (e.g., the IoT device 320a) included in the installation data 505. In an embodiment, the hub device 330 (e.g., the processor 404) may obtain an installation code 505a of the IoT device 320a from the installation data 505 and establish a connection (e.g., a Zigbee connection, a Z-wave connection, or a BLE connection) with the IoT device 320a. In an embodiment, the installation code 505a may include a security key used to perform encrypted communication with the IoT device 320a through the connection. The IoT device 320a may be connected to the hub device 330 that is aware of the installation code 505a.

In operation 720, the hub device 330 (e.g., the processor 404) may request the server 310 to generate a device record related to the IoT device 320a that established the connection. In an embodiment, the hub device 330 (e.g., the processor 404) may transmit a device record generation request including device identification information of the IoT device 320a to the server 310. In response to the device record generation request, the server 310 may generate and store a device record for the IoT device 320a. In an embodiment, the device record may be used by the server 310 to store information (e.g., sensor data and/or status information) collected from the IoT device 320a through the hub device 330 for an IoT service.

In operation 725, the hub device 330 (e.g., the processor 404) may receive, from the server 310, an onboarding completion response indicating that a device record for the IoT device 320a has been generated.

In operation 730, the hub device 330 (e.g., the processor 404) may determine whether or not device onboarding of all IoT devices 320 included in the installation data 505 is complete based on the installation data 505. In an embodiment, the hub device 330 (e.g., the processor 404) may perform device onboarding procedures of one or more IoT devices 320 sequentially or in parallel. If the device onboarding of all IoT devices 320 is not completed, the hub device 330 (e.g., the processor 404) may proceed to operation 715 to perform device onboarding of the next IoT device (e.g., the IoT device 320b). If the device onboarding of all IoT devices 320 is completed, the hub device 330 (e.g., the processor 404) may proceed to operation 735. In an embodiment, even if the device onboarding of all IoT devices 320 is not completed, the hub device 330 (e.g., the processor 404) may proceed to operation 735 if a specified time elapses after starting of the device onboarding or if an onboarding stop command is received from the electronic device 201.

In operation 735, the hub device 330 (e.g., the processor 404) may identify that the device onboarding procedure has been completed. In an embodiment, the hub device 330 (e.g., the processor 404) may provide to the user with a message informing that the IoT devices 320 of the package 500 have been registered through a display (e.g., the display 410) or through sound.

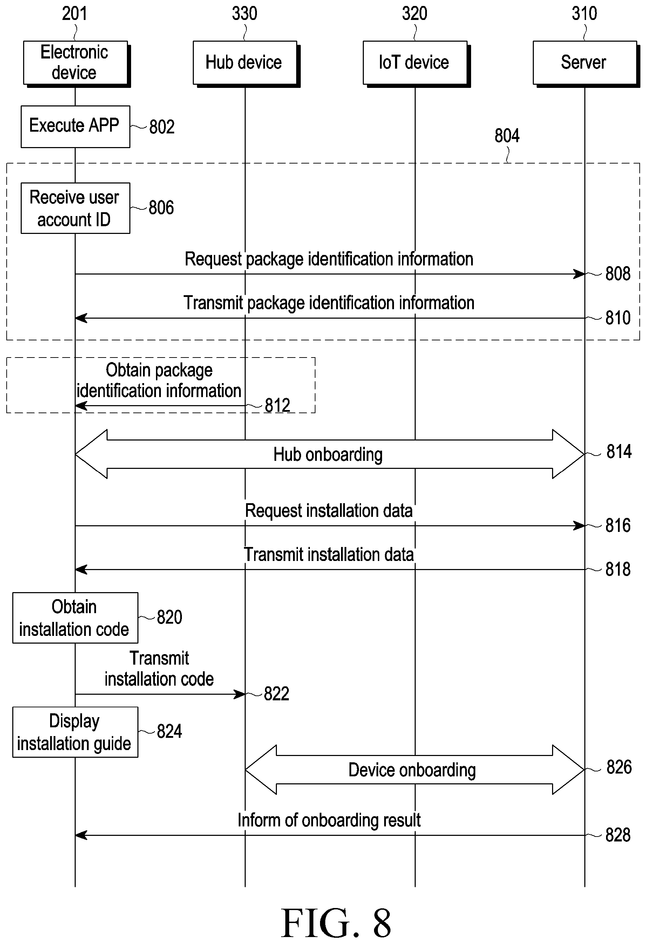

FIG. 8 illustrates an example of a sequence diagram of providing fast connection of IoT devices according to an embodiment. Depending on embodiments, at least one of the operations described below may be omitted, modified, or changed in order.

Referring to FIG. 8, in operation 702, the electronic device 201 may execute an IoT application for an IoT service. In an embodiment, the electronic device 201 may receive a user input requesting addition of devices through the IoT application. In an embodiment, the electronic device 201 may receive a user input requesting onboarding of the hub device 330 or onboarding of a package 500 including the hub device 330 and at least one IoT device 320 through the IoT application. The electronic device 201 may execute operation 804 or operation 812 to obtain package identification information (e.g., a hub serial number or package ID) required for onboarding of the package 500.

Operation 804 is intended to obtain package identification information from the server 310, and may include, for example, at least one of operation 806, operation 808, or operation 810. In operation 806, the electronic device 201 may receive a user account ID from the user through, for example, the input module 250. In an embodiment, the electronic device 201 may obtain a user account ID from login information of the IoT application. In operation 808, the electronic device 201 may transmit a package identification request message including the user account ID to the server 310. The server 310 may store installation data 505 obtained from the manufacturer or seller of the package 500 or the hub device 330. In an embodiment, after the package 500 or the hub device 330 is sold to a user, the server 310 may obtain and store a user account ID and installation data 505 of the user who purchased the package 500 or the hub device 330 from the seller, and the installation data 505 may include package identification information (e.g., a hub serial number or package ID). In operation 810, the server 310 may transmit the package identification information included in the installation data 505 to the electronic device 201, based on the user account ID. The electronic device 201 may receive the package identification information corresponding to the user account ID from the server 310.

In operation 812, the electronic device 201 may obtain package identification information directly from the hub device 330 or the package 500, instead of receiving the package identification information from the server 310. In an embodiment, the electronic device 201 may obtain a hub serial number from a QR code of the hub device 330. In an embodiment, the electronic device 201 may obtain a package ID from a QR code of the package 500. In an embodiment, the hub serial number or the package ID may be printed or attached to the surface of the hub device 330 or the packaging box of the package 500, and the electronic device 201 may receive the hub serial number or the package ID entered by the user. In an embodiment, operation 812 may be omitted, and the electronic device 201 may obtain the hub serial number during the hub onboarding procedure in operation 814.

In operation 814, the electronic device 201 may perform a hub onboarding procedure. In an embodiment, the electronic device 201 may identify ownership of the hub device 330 using the hub serial number obtained, for example, in operation 804 or operation 812, for the hub onboarding procedure. In an embodiment, the hub device 330 may authenticate the electronic device 201, based on the hub serial number received from the electronic device 201, and proceed with the hub onboarding procedure.

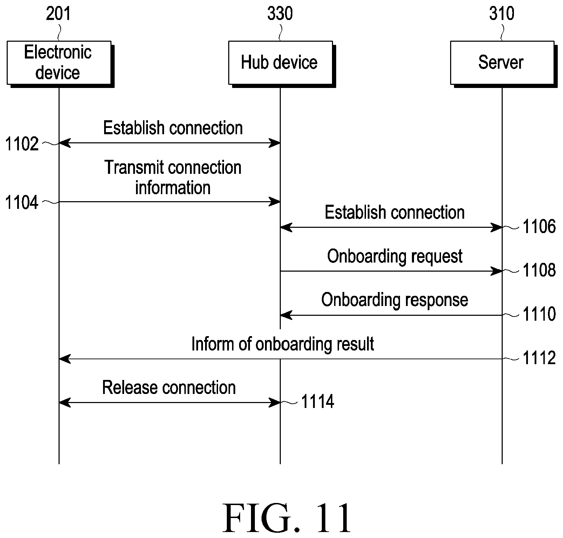

In an embodiment, the hub onboarding procedure may include at least one of an operation of establishing a connection between the electronic device 201 and the hub device 330, an operation of the electronic device 201 transmitting connection information to the hub device 330, an operation of the hub device 330 connecting to the server 310 using the connection information, an operation of the hub device 330 transmitting device information (e.g., at least one of a device ID, a hub serial number, a hub model name, or a hub model code) of the hub device 330 to the server 310, or an operation of the server 310 notifying the electronic device 201 of the onboarding result of the hub device 330. In an embodiment, the connection information may include AP (access point) information (e.g., an SSID (service set ID) and/or a password) for an AP (not shown) that the hub device 330 is to access. In an embodiment, the hub onboarding procedure may include at least one of the operations illustrated in FIG. 11.

In operation 816 and operation 818, the electronic device 201 may obtain installation data 505 for at least one IoT device 320 from the server 310. In an embodiment, operations 816 and operation 818 may be performed concurrently with or at least partially overlapping the hub onboarding procedure in operation 814. In an embodiment, operations 816 and operation 818 may be performed before or after the hub onboarding procedure in operation 814.

In operation 816, the electronic device 201 may transmit an installation data request message to the server 310. In an embodiment, the installation data request message may include the package identification information (e.g., a hub serial number or package ID) and/or the user account ID. In operation 818, the server 310 may find the installation data 505, based on the package identification information and/or the user account ID, and transmit the installation data 505 to the electronic device 201. In an embodiment, the installation data 505 provided from the server 310 may include at least a hub serial number, a device ID, and an installation code 505a.

In operation 820, the electronic device 201 may obtain an installation code 505a for at least one IoT device 320 included in the installation data 505. In operation 822, the electronic device 201 may transmit at least the installation code 505a to the hub device 330. In an embodiment, the electronic device 201 may transmit at least some or all of the installation data 505 to the hub device 330. In an embodiment, the electronic device 201 may transmit a device ID (e.g., a device EUI) and an installation code 505a for each IoT device 320 included in the installation data 505 to the hub device 330. In an embodiment, at least some or all of the installation data 505 may be transmitted directly from the electronic device 201 to the hub device 330 (e.g., through a Wi-Fi connection or a BLE connection), or may be transmitted from the electronic device 201 to the hub device 330 through the server 310.

In operation 824, the electronic device 201 may display an installation guide for at least one IoT device 320 included in the installation data 505, based on the installation data 505. Although not illustrated, the electronic device 201 may obtain an installation guide for at least one IoT device 320 included in the installation data 505 from a server (e.g., the server 310 or a manufacturer server (not illustrated)), based on device information (e.g., a device model name and/or a device model code) included in the installation data 505. The electronic device 201 may display the installation guide until the completion of onboarding for at least one IoT device 320 is notified of from the server 310 or for a specified period of time. The user may operate at least one IoT device 320 (e.g., pressing a specified button, mounting a battery, or turning on the power), based on the installation guide, to switch at least one IoT device 320 to a state (e.g., a setup mode) (e.g., a state of broadcasting a beacon signal) in which it is connectable to the hub device 330. The hub device 330 may discover at least one IoT device 320 by receiving the beacon signal. At least one IoT device 320 may maintain the setup mode until it is connected to the hub device 330.

In operation 826, the hub device 330 may perform a device onboarding procedure for registering respective IoT devices 320 with the server 310, based on the installation data 505 (e.g., the installation code 505a) received in operation 822. In an embodiment, the device onboarding procedure may include at least one of operation 715, operation 720, or operation 725. In an embodiment, the hub device 330 may enter a join mode to perform the device onboarding procedure after receiving the installation data 505. In the join mode, the hub device 330 may identify at least one IoT device 320 (e.g., the IoT device 320a), based on the installation data 505 (e.g., a device ID) received in operation 822, to discover the IoT device 320a and establish a connection (e.g., a Zigbee connection, a Z-wave connection, or a BLE connection) with the discovered IoT device 320a. The hub device 330 may perform encrypted communication with the discovered IoT device 320a through the connection, based on the installation code 505a.

In the join mode, the hub device 330 may request the server 310 to generate a device record for the discovered IoT device 320a. In an embodiment, the hub device 330 may maintain the join mode until device onboarding for all of the IoT devices 320 included in the installation data 505 is completed. In an embodiment, the hub device 330 may maintain the join mode for a specified period of time after starting the device onboarding procedure. In an embodiment, the hub device 330 may maintain the join mode until an onboarding stop command is received from the electronic device 201.

In operation 828, the server 310 may transmit, to the electronic device 201, an onboarding result indicating that device onboarding for at least one IoT device 320 included in the installation data 505 has been completed. In an embodiment, the server 310 may transmit the onboarding result when device onboarding for all of the IoT devices 320 included in the installation data 505 has been completed. In an embodiment, the server 310 may transmit the onboarding result whenever device onboarding for any one IoT device 320 included in the installation data 505 is completed. In an embodiment, if an onboarding result for all of the IoT devices 320 is not received from the server 310 until a specified period of time elapses after transmitting the installation data 505 in operation 822, the electronic device 201 may transmit an onboarding stop command to the hub device 330.

When the device onboarding is completed, the server 310 may manage a device record for each IoT device 320 and include information (e.g., sensor data and/or status information) of each IoT device 320, collected through the hub device 330, in the device record. In an embodiment, the server 310 may provide the electronic device 201 with information (e.g., sensor data and/or status information) included in the device record according to a specified event or a request from the electronic device 201.

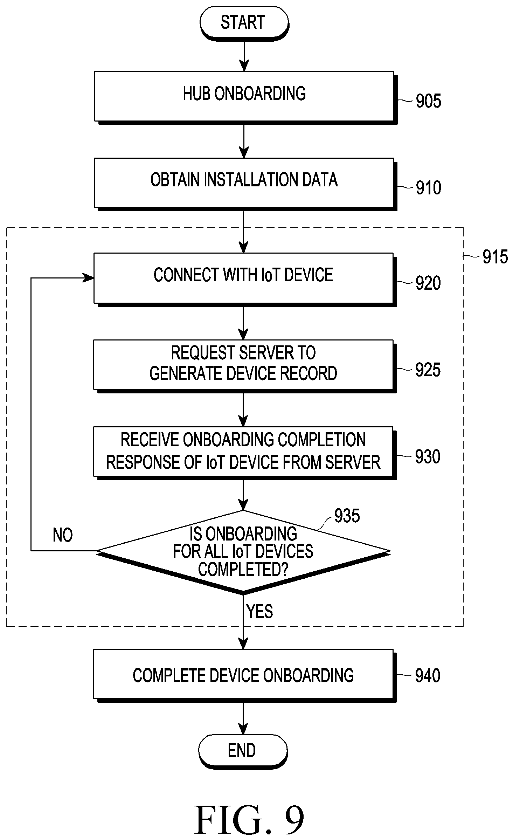

FIG. 9 is a flowchart illustrating the operation of a hub device for registering IoT devices according to an embodiment. At least one of the operations described below may be executed by the processor 404 of the hub device 330. Depending on embodiments, at least one of the operations described below may be omitted, modified, or changed in order.

Referring to FIG. 9, in operation 905, the hub device 330 (e.g., the processor 404) may connect to the electronic device 201 and may be registered with the server 310 through a hub onboarding procedure. In an embodiment, the hub device 330 (e.g., the processor 404) may perform a hub onboarding procedure according to an onboarding command from the electronic device 201.

In operation 910, the hub device 330 (e.g., the processor 404) may obtain installation data (e.g., the installation data 505) related to at least one IoT device 320 of the hub. In an embodiment, the installation data 505 may include installation code 505a for at least one IoT device 320 connectable to the hub device 330. The hub device 330 (e.g., the processor 404) may obtain an installation code (e.g., the installation code 505a) for each IoT device 320 from the installation data 505.

In an embodiment, the hub device 330 (e.g., the processor 404), based on identification information (e.g., a hub serial number) of the hub device 330 or identification information (e.g., a package ID) of a package 500 including the hub device 330 and at least one IoT device 320, may request installation data 505 from the server 310 and may receive installation data 505 from the server 310. In an embodiment, the hub device 330 (e.g., the processor 404) may obtain installation data 505 from a machine-readable indicator (e.g., a QR code or bar code) of the package 500 including the hub device 330 and the IoT device 320.

In operation 915, the hub device 330 (e.g., the processor 404) may perform a device onboarding procedure for the respective IoT devices 320 included in the installation data 505, based on the installation data 505. In an embodiment, operation 915 may include at least one of operation 920, operation 925, operation 930, or operation 935. In an embodiment, the installation data 505 may include device identification information (e.g., at least one of a device ID, a model name, or a model code) and an installation code (e.g., the installation code 505a) of at least one IoT device 320 connectable to the hub device 330.

In operation 920, the hub device 330 (e.g., the processor 404) may establish a connection with any one IoT device (e.g., the IoT device 320a) included in the installation data 505. In an embodiment, the hub device 330 (e.g., the processor 404) may obtain an installation code 505a of the IoT device 320a from the installation data 505 and establish a connection (e.g., a Zigbee connection, a Z-wave connection, or a BLE connection) with the IoT device 320a. In an embodiment, the installation code 505a may include a security key used to perform encrypted communication with the IoT device 320a through the connection. The IoT device 320a may be connected to the hub device 330 that is aware of the installation code 505a.

In operation 925, the hub device 330 (e.g., the processor 404) may request the server 310 to generate a device record related to the IoT device 320a that established the connection. In an embodiment, the hub device 330 (e.g., the processor 404) may transmit a device record generation request including device identification information of the IoT device 320a to the server 310. The server 310 may generate and store a device record for the IoT device 320a in response to the device record generation request. In an embodiment, the device record may be used by the server 310 to store information (e.g., sensor data and/or status information) collected from the IoT device 320a through the hub device 330 for an IoT service.

In operation 930, the hub device 330 (e.g., the processor 404) may receive, from the server 310, an onboarding completion response indicating that a device record for the IoT device 320a has been generated.

In operation 935, the hub device 330 (e.g., the processor 404) may determine whether or not device onboarding of all IoT devices 320 included in the installation data 505 is completed based on the installation data 505. In an embodiment, the hub device 330 (e.g., the processor 404) may perform device onboarding procedures of one or more IoT devices 320 sequentially or in parallel. If device onboarding of all IoT devices 320 is not completed, the hub device 330 (e.g., the processor 404) may proceed to operation 920 to perform device onboarding of the next IoT device (e.g., the IoT device 320b). If device onboarding of all IoT devices 320 is completed, the hub device 330 (e.g., the processor 404) may proceed to operation 940. In an embodiment, even if the device onboarding of all IoT devices 320 is not completed, the hub device 330 (e.g., the processor 404) may proceed to operation 735 if a specified time has elapses after starting the device onboarding procedure or if an onboarding stop command is received from the electronic device 201.

In operation 940, the hub device 330 (e.g., the processor 404) may identify that the device onboarding procedure has been completed. In an embodiment, the hub device 330 (e.g., the processor 404) may provide the user with a message informing that the IoT devices 320 of the package 500 have been registered through a display (e.g., the display 410) or through sound.

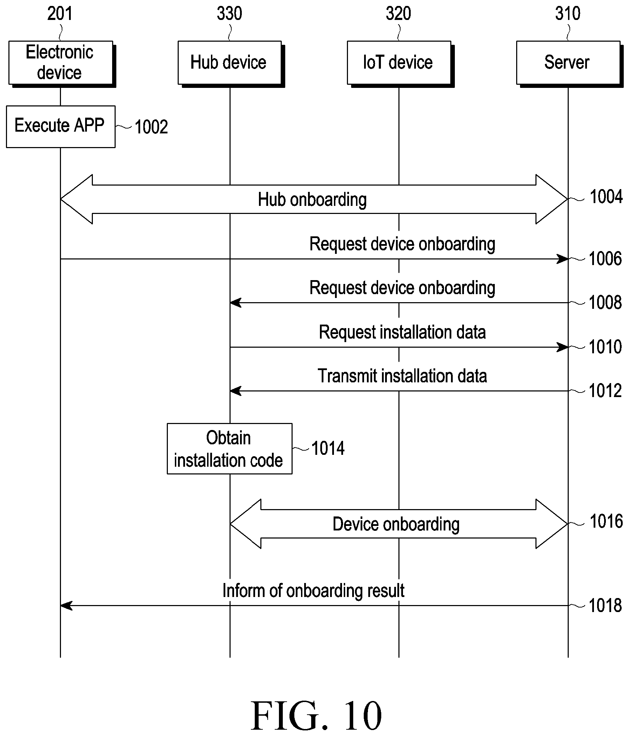

FIG. 10 illustrates an example of a sequence diagram of providing fast connection of IoT devices according to an embodiment. Depending on the embodiments, at least one of the operations described below may be omitted, modified, or changed in order.

Referring to FIG. 10, in operation 1002, the electronic device 201 may execute an IoT application for an IoT service. In an embodiment, the electronic device 201 may receive a user input requesting addition of devices through the IoT application. In an embodiment, the electronic device 201 may receive a user input requesting onboarding of the hub device 330 or onboarding of a package 500 including the hub device 330 and at least one IoT device 320 through the IoT application.

In operation 1004, the electronic device 201 may perform a hub onboarding procedure. Although not illustrated, in an embodiment, the electronic device 201 may identify ownership of the hub device 330 using the hub serial number obtained, for example, in operation 804 or operation 812, for the hub onboarding procedure. In an embodiment, the hub device 330 may authenticate the electronic device 201, based on the hub serial number received from the electronic device 201, and proceed with the hub onboarding procedure.

In an embodiment, the hub onboarding procedure may include at least one of an operation of establishing a connection between the electronic device 201 and the hub device 330, an operation of the electronic device 201 transmitting connection information (e.g., AP information) to the hub device 330, an operation of the hub device 330 connecting to the server 310 using the connection information, an operation of the hub device 330 transmitting device information (e.g., at least one of a device ID, a hub serial number, a hub model name, or a hub model code) of the hub device 330 to the server 310, or an operation of the server 310 notifying the electronic device 201 of the onboarding result of the hub device 330. In an embodiment, the hub onboarding procedure may include at least one of the operations illustrated in FIG. 11.

In operation 1006, the electronic device 201 may transmit a device onboarding request to the server 310. In an embodiment, when the hub onboarding procedure in operation 1004 is completed, the electronic device 201 may transmit a device onboarding request for at least one IoT device 320 associated with the hub device 330 to the server 310. In an embodiment, the device onboarding request may include a user account ID and/or package identification information (e.g., a hub serial number or package ID).

In operation 1008, the server 310 may transmit a device onboarding command to the hub device 330, based on the device onboarding request. In an embodiment, the device onboarding command may include at least some or all of installation data 505 related to the hub device 330. In an embodiment, the device onboarding command may include at least a device ID (e.g., device EUI) and an installation code 505a for each IoT device 320 that is connectable to the hub device 330. In an embodiment, if the device onboarding command does not include the device ID and the installation code 505a, operations 1010 and 1012 may be performed. If the device onboarding command includes the device ID and the installation code 505a, operations 1010 and 1012 may be omitted. In an embodiment, the electronic device 201 may transmit the device onboarding command directly to the hub device 330 (e.g., without passing through the server 310), and operations 1006 and 1008 may be omitted.

In operation 1010 and operation 1012, the hub device 330 may obtain at least some or all of the installation data 505 for at least one IoT device 320 from the server 310. In operation 1010, the hub device 330 may transmit an installation data request message to the server 310. In an embodiment, the installation data request message may include the package identification information (e.g., a hub serial number or package ID) and/or the user account ID. In operation 1012, the server 310 may find the installation data 505, based on the package identification information and/or the user account ID, and transmit at least some or all of the installation data 505 to the hub device 330. In operation 1014, the hub device 330 may obtain an installation code 505a for at least one IoT device 320 included in the installation data 505.

Although not illustrated, in an embodiment, the hub device 330 may display an installation guide for at least one IoT device 320 included in the installation data 505, based on the installation data 505, on the display module 410. Although not illustrated, the hub device 330, based on device information (e.g., a device model name and/or a device model code) included in the installation data 505, may obtain an installation guide for at least one IoT device 320 included in the installation data 505 from a server (e.g., the server 310 or a manufacturer server (not shown)). The hub device 330 may display the installation guide until device onboarding for all of the IoT devices 320 is completed or for a specified period of time. The user may operate at least one IoT device 320 (e.g., pressing a specified button, mounting a battery, or turning on the power), based on the installation guide, to switch at least one IoT device 320 to a state (e.g., a setup mode) (e.g., a state of broadcasting a beacon signal) in which it is connectable to the hub device 330. Each IoT device 320 may maintain the setup mode until it is connected to the hub device 330.

In operation 1016, the hub device 330 may perform a device onboarding procedure to register the respective IoT devices 320 with the server 310, based on the installation data 505 (e.g., the installation code 505a) received in operation 1008 or operation 1012. In an embodiment, the device onboarding procedure may include at least one of operation 920, operation 925, or operation 930. In an embodiment, the hub device 330 may enter a join mode to perform a device onboarding procedure after receiving the installation data 505. In the join mode, the hub device 330 may identify at least one IoT device 320 (e.g., the IoT device 320a), based on the installation data 505 (e.g., a device ID), to discover the IoT device 320a and establish a connection (e.g., a Zigbee connection, a Z-wave connection, or a BLE connection) with the discovered IoT device 320a. The hub device 330 may perform encrypted communication with the discovered IoT device 320a, based on the installation code 505a. In the join mode, the hub device 330 may request the server 310 to generate a device record for the discovered IoT device 320a. In an embodiment, the hub device 330 may maintain the join mode until device onboarding for all of the IoT devices 320 included in the installation data 505 is completed. In an embodiment, the hub device 330 may maintain the join mode for a specified period of time after starting the device onboarding procedure. In an embodiment, the hub device 330 may maintain the join mode until an onboarding stop command is received from the electronic device.

In operation 1018, the server 310 may transmit, to the electronic device 201, an onboarding result indicating that device onboarding for at least one IoT device 320 included in the installation data 505 has been completed. In an embodiment, the server 310 may transmit the onboarding result when device onboarding for all of the IoT devices 320 included in the installation data 505 has been completed. In an embodiment, the server 310 may transmit the onboarding result whenever device onboarding for any one IoT device 320 included in the installation data 505 is completed. In an embodiment, if an onboarding result for all of the IoT devices 320 is not received from the server 310 until a specified period of time elapses after transmitting the device onboarding request in operation 1006, the electronic device 201 may transmit an onboarding stop command to the hub device 330 directly or through the server 310.

When the device onboarding is completed, the server 310 may manage a device record for each IoT device 320 and include information (e.g., sensor data and/or status information) of each IoT device 320, collected through the hub device 330, in the device record. In an embodiment, the server 310 may provide the electronic device 201 with information (e.g., sensor data and/or status information) included in the device record according to a specified event or a request from the electronic device 201.

In an embodiment, while the device onboarding procedure is in progress in operation 826 or operation 1016, the electronic device 201 may display the onboarding completion status of at least one IoT device 320 included in the installation data 505 on the display module 260. Whenever device onboarding is completed for each IoT device 320, the electronic device 201 may display the onboarding completion status of the corresponding IoT device (e.g., the IoT device 320a) and continue to display the installation guide of the IoT device (e.g., the IoT device 320b)) that has not yet been onboarded.

In an embodiment, the electronic device 201 may disable device onboarding of at least one (e.g., the IoT device 320d) of the IoT devices 320 included in the installation data 505, based on user input. In an embodiment, the electronic device 201 may deactivate or may not display the installation guide of the disabled IoT device 320d. In an embodiment, the electronic device 201 may include the IoT device 320d in a device list as "a device to be added" and display the same.

In an embodiment, if another IoT device is discovered while performing the device onboarding procedure (e.g., operation 826 or operation 1016) of at least one IoT device 320 included in the package 500, the hub device 330 may not allow device onboarding of the discovered IoT device or may delay the same until the device onboarding procedure of the package 500 is completed. In an embodiment, if another IoT device is discovered while performing the device onboarding procedure (e.g., operation 826 or operation 1016) of at least one IoT device 320 included in the package 500 and if the discovered IoT device does not require an installation code, the hub device 330 may allow device onboarding of the discovered IoT device.

In an embodiment, after the hub onboarding of the hub device 330 is completed in operation 814 or operation 1004, in order to connect a new IoT device, which is not included in the package 500, to the hub device 330, the electronic device 201 may request installation data (e.g., an installation code) for the new IoT device from the server 310. In an embodiment, the electronic device 201 may obtain device identification information (e.g., a device serial number) of the new IoT device from a QR code of the new IoT device and obtain an installation code for the new IoT device from the server 310, based on the device identification information.

FIG. 11 is a sequence diagram illustrating a hub onboarding procedure according to an embodiment. Depending on embodiments, at least one of the operations described below may be omitted, modified, or changed in order.

Referring to FIG. 11, in operation 1102, the electronic device 201 may establish a first connection (e.g., a Wi-Fi connection, a Bluetooth connection, or a BLE connection) with the hub device 330. In an embodiment, the hub device 330 may authenticate the electronic device 201, based on a hub serial number received from the electronic device 201 through the first connection. In operation 1104, the electronic device 1104 may transmit, to the hub device 330, connection information (e.g., AP information) to be used for a second connection between the server 310 and the hub device 330.

In operation 1106, the hub device 330 may establish a second connection (e.g., an Internet connection) with the server 310 using the connection information. In operation 1108, the hub device 330 may transmit an onboarding request to the server 310 through the second connection. In an embodiment, the onboarding request may include device information (e.g., at least one of a hub serial number, a hub device ID, or a hub model name) of the hub device 330. In operation 1110, the server 310 may store the device information of the hub device 330 in response to the onboarding request and transmit an onboarding response to the hub device 330. In an embodiment, the server 310 may transmit the onboarding response when device onboarding for all of the IoT devices 320 included in the installation data 505 is completed. In an embodiment, the server 310 may transmit the onboarding response whenever device onboarding for any one IoT device 320 included in the installation data 505 is completed. In an embodiment, when device onboarding for all of the IoT devices 320 included in the installation data 505 is completed, the hub device 330 may release the second connection with the server 310.

In operation 1112, the server 310, based on the installation data 505 related to the package 500, may transmit, to the electronic device 201, an onboarding result indicating that device onboarding for at least one IoT device 320 included in the installation data 505 is completed. In an embodiment, the server 310 may transmit the onboarding result when device onboarding for all of the IoT devices 320 included in the installation data 505 is completed. In an embodiment, the server 310 may transmit the onboarding result whenever device onboarding for any one IoT device 320 included in the installation data 505 is completed. In operation 1114, the electronic device 201 may release the first connection with the hub device 330, based on receiving the onboarding result.

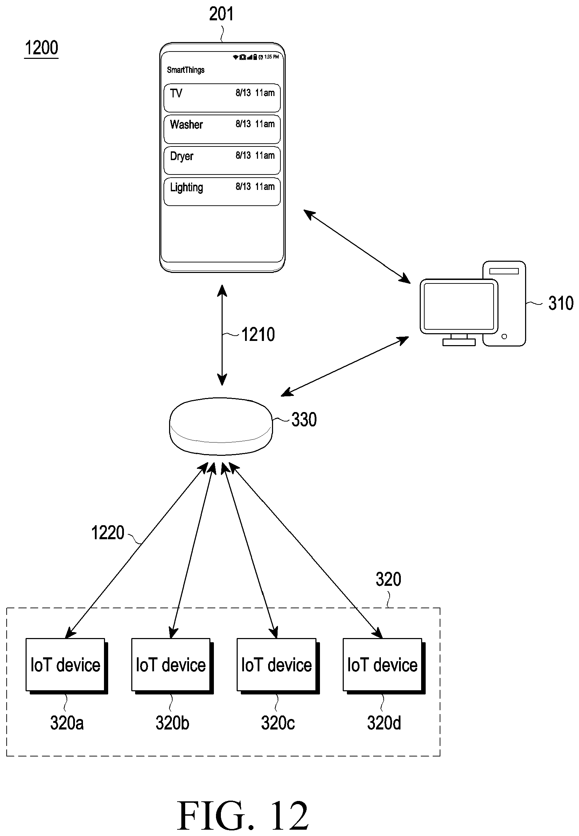

FIG. 12 is a diagram illustrating an IoT environment including a hub device according to an embodiment.

Referring to FIG. 12, in an IoT environment 1200, the electronic device 201 may perform a device onboarding procedure for registering one or more IoT devices 320 (e.g., the IoT devices 320a, 320b, 320c, and 320d) with the electronic device 201 while communicating directly with the hub device 330 through a first connection 1210 (e.g., a Wi-Fi connection or a BLE connection), instead of through the server 310. In an embodiment, the electronic device 201 may receive installation data 505 related to a package 500 including the hub device 330 and at least one IoT device 320 from a server (e.g., the server 310) (e.g., operation 818), and transmit the installation data 505 (e.g., the installation code 505a) to the hub device 330 (e.g., operation 822).

In an embodiment, the hub device 330 may perform a device onboarding procedure for registering at least one IoT device 320 with the electronic device 201, based on the installation data 505, without passing through the server (e.g., the server 310). In an embodiment, the hub device 330 may enter a join mode to perform the device onboarding procedure after receiving the installation data 505. In the join mode, the hub device 330 may identify at least one IoT device 320 (e.g., the IoT device 320a), based on the installation data 505 (e.g., a device ID), to discover the IoT device 320a, and establish a second connection 1220 (e.g., a Zigbee connection, a Z-wave connection, or a BLE connection) with the discovered IoT device 320a. The hub device 330 may perform encrypted communication with the discovered IoT device 320a through the second connection 1220, based on an installation code 505a obtained from the installation data 505.

In the join mode, the hub device 330 may request the electronic device 201 to generate a device record for the discovered IoT device 320a, and receive an onboarding response from the electronic device 201. In an embodiment, the electronic device 201 may store and manage information (e.g., sensor data and/or status information) collected from at least one IoT device 320 in the device record generated through the device onboarding procedure. In an embodiment, the electronic device 201 may share the device record generated through the device onboarding procedure with the server 310.

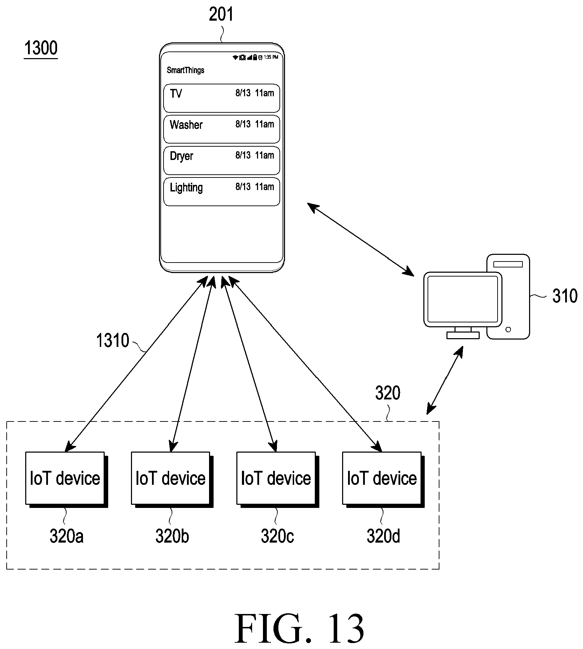

FIG. 13 is a diagram illustrating an IoT environment not including a hub device according to an embodiment.

Referring to FIG. 13, in an IoT environment 1300, the electronic device 201 may perform a device onboarding procedure for registering at least one IoT device 320 with the electronic device 201 through a first connection 1310 without passing through a hub device (e.g., the hub device 330). In an embodiment, the electronic device 201 may receive installation data 505 related to a package 500 including at least one IoT device 320 from a server (e.g., the server 310) (e.g., operation 818).

In an embodiment, the electronic device 201 may perform a device onboarding procedure for registering at least one IoT device 320 with the electronic device 201, based on the installation data 505, without passing through the server (e.g., the server 310). In an embodiment, the electronic device 201 may enter a join mode to perform the device onboarding procedure after receiving the installation data 505. In the join mode, the electronic device 201 may identify at least one IoT device 320 (e.g., the IoT device 320a), based on the installation data 505 (e.g., a device ID), to discover the IoT device 320a, and establish a first connection 1310 (e.g., a Zigbee connection, a Z-wave connection, or a BLE connection) with the discovered IoT device 320a. The electronic device 201 may perform encrypted communication with the discovered IoT device 320a through the first connection 1310, based on an installation code 505a obtained from the installation data 505.

According to an embodiment, in the join mode, the electronic device 201 may generate a device record for the discovered IoT device 320a. In an embodiment, the electronic device 201 may store and manage information (e.g., sensor data and/or status information) collected from at least one IoT device 320 in the device record generated through the device onboarding procedure. In an embodiment, the electronic device 201 may share the device record generated through the device onboarding procedure with the server 310.

In an embodiment, the electronic device 201 may be configured to include at least one function of the hub device 330 or the server 310 described above. The installation data (e.g., the installation data 505) may include information necessary to be directly connected to at least one IoT device 320. In an embodiment, the installation data 505 may include a Wi-Fi AP SSID and/or a password of each IoT device 320. In an embodiment, the installation data 505 may include identification information (e.g., a device ID, a serial number, and/or a MAC address) of each IoT device 320. In an embodiment, the installation data 505 may include device information necessary for the electronic device 201 to connect to each IoT device 320 using BLE, such as at least one of a manufacturer ID, model information (model name and/or model code), a setup ID, a serial number, or a MAC address.

In an embodiment, the electronic device 201 may connect to each IoT device 320, based on the installation data 505. In an embodiment, at least one (e.g., the IoT device 320a) of the IoT devices may operate as a Wi-Fi AP and broadcast a beacon signal. The electronic device 201 may receive a beacon signal of an IoT device 320a operating as an AP having a Wi-Fi SSID and MAC address included in the installation data 505, thereby discovering the IoT device 320a, and establish a Wi-Fi connection with the discovered IoT device 320a. In an embodiment, the electronic device 201 may receive a BLE advertising signal broadcast from the IoT device 320a to discover the IoT device 320a, and establish a BLE connection with the discovered IoT device 320a.

In an embodiment, the electronic device 201 may transmit connection information capable of Internet connection to the IoT device 320a through the established connection (e.g., a Wi-Fi connection or a BLE connection). The connection information may include at least one of a Wi-Fi AP SSID, a password, or a security protocol type of an AP (not shown) that provides Internet connection. The IoT device 320a may establish an Internet connection through the AP using the connection information.

In an embodiment, the electronic device 201 may transmit, to the IoT device 320a, server information that enables the IoT device 320a to connect to the server 310 through the established connection (e.g., a Wi-Fi connection or a BLE connection). In an embodiment, the server information may include at least one of a server URL and/or a security token. The IoT device 320a may be registered with the server 310 through the Internet connection using the server information. The electronic device 201 may repeat the above-described procedure for the respective IoT devices included in the installation data 505.

An electronic device 201 according to an embodiment may include a communication circuit 290 and at least one processor 220 operatively connected to the communication circuit. The at least one processor may be configured to obtain installation data 505 required for a first external electronic device 330 to register at least one second external electronic device 320 with a server 310. The at least one processor may be configured to perform a first onboarding procedure for registering the first external electronic device with the server 310 through the communication circuit. The at least one processor may be configured to transmit the installation data to the first external electronic device through the communication circuit after performing the first onboarding procedure. The at least one processor may be configured to display an installation guide for onboarding the at least one second external electronic device, based on the installation data. The at least one processor may be configured to receive an onboarding result indicating that the at least one second external electronic device has been onboarded by the first external electronic device from the server through the communication circuit.

In an embodiment, the installation data may include at least one of a serial number of the first external electronic device, a device identifier (ID) of each of the at least one second external electronic device, or an installation code including a security key used by the first external electronic device to onboard the at least one second external electronic device.

In an embodiment, the installation data may further include at least one of a package identifier (ID) to identify a package including the first external electronic device and the at least one second external electronic device, a product model name of the package, a device identifier (ID) of the first external electronic device, a model name of the first external electronic device, a model code of each of the at least one second external electronic device, or a model name of each of the at least one second external electronic device.

In an embodiment, the at least one processor may be configured to receive at least some of the installation data from the server or the first external electronic device, based on at least one of the serial number or the package ID of the first external electronic device.

In an embodiment, the at least one processor may be configured to request the serial number of the first external electronic device from the server, based on a user account identifier (ID), and receive the serial number of the first external electronic device from the server.

In an embodiment, the at least one processor may be configured to obtain the serial number of the first external electronic device from a machine-readable indicator of the first external electronic device.

In an embodiment, the installation guide may include a message guiding a user operation of configuring the at least one second external electronic device as a setup mode so that the at least one second external electronic device is connected to the first external electronic device.

In an embodiment, the message may include at least one of guide information requesting, for the at least one second external electronic device, to capture a machine-readable indicator of the at least one second external electronic device through a camera of the electronic device, guide information requesting to press a designated button of the at least one second external electronic device, guide information requesting to mount a battery to the at least one second external electronic device, or guide information requesting to turn on the power of the at least one second external electronic device.

In an embodiment, the at least one processor may be configured to receive the installation guide from the server, based on the installation data.

In an embodiment, the at least one processor may be configured to perform a second onboarding procedure for registering the at least one second external electronic device with the server, based on the installation data.

A method of operating an electronic device 201 according to an embodiment may include an operation 605 of obtaining installation data 505 required for a first external electronic device 330 to register at least one second external electronic device 320 with a server 310. The method may include an operation 610 of performing a first onboarding procedure for registering the first external electronic device with the server 310. The method may include an operation 615 of transmitting the installation data to the first external electronic device after performing the first onboarding procedure. The method may include an operation 620 of displaying an installation guide for onboarding the at least one second external electronic device, based on the installation data. The method may include an operation 625 of receiving an onboarding result indicating that the at least one second external electronic device has been onboarded by the first external electronic device from the server.

In an embodiment, the installation data may include at least one of a serial number of the first external electronic device, a device identifier (ID) of each of the at least one second external electronic device, or an installation code including a security key used by the first external electronic device to onboard the at least one second external electronic device.

In an embodiment, the installation data may further include at least one of a package identifier (ID) to identify a package including the first external electronic device and the at least one second external electronic device, a product model name of the package, a device identifier (ID) of the first external electronic device, a model name of the first external electronic device, a model code of each of the at least one second external electronic device, or a model name of each of the at least one second external electronic device.

In an embodiment, the method may further include an operation of receiving the installation data from the server or the first external electronic device, based on at least one of the serial number or the package ID of the first external electronic device.

In an embodiment, the method may further include an operation of requesting the serial number of the first external electronic device from the server, based on a user account identifier (ID), and an operation of receiving the serial number of the first external electronic device from the server.

In an embodiment, the method may further include an operation of obtaining the serial number of the first external electronic device from a machine-readable indicator of the first external electronic device.

In an embodiment, the installation guide may include a message guiding a user operation of configuring the at least one second external electronic device as a setup mode so that the at least one second external electronic device is connected to the first external electronic device.

In an embodiment, the message may include at least one of guide information requesting, for the at least one second external electronic device, to capture a machine-readable indicator of the at least one second external electronic device through a camera of the electronic device, guide information requesting to press a designated button of the at least one second external electronic device, guide information requesting to mount a battery to the at least one second external electronic device, or guide information requesting to turn on the power of the at least one second external electronic device.

In an embodiment, the method may further include an operation of receiving the installation guide from the server, based on the installation data.

In an embodiment, the method may further include an operation of performing a second onboarding procedure for registering the at least one second external electronic device with the server, based on the installation data.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," *"coupled to," "connected with,"* or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 240) including one or more instructions that are stored in a storage medium (e.g., internal memory 236 or external memory 238) that is readable by a machine (e.g., the electronic device 201). For example, a processor (e.g., the processor 220) of the machine (e.g., the electronic device 201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a communication circuit;
memory storing one or more computer programs; and
one or more processors communicatively coupled to the communication circuit, and the memory,
wherein the one or more computer programs include computer-executable instructions that, when executed by the one or more processors individually or collectively, cause the electronic device to:
obtain installation data required for a first external electronic device to register at least one second external electronic device with a server,
perform a first onboarding procedure for registering the first external electronic device with the server through the communication circuit,
transmit the installation data to the first external electronic device through the communication circuit after performing the first onboarding procedure,
display an installation guide for onboarding the at least one second external electronic device, based on the installation data, and
receive an onboarding result indicating that the at least one second external electronic device has been onboarded by the first external electronic device from the server through the communication circuit.

2. The electronic device of claim 1, wherein the installation data comprises at least one of a serial number of the first external electronic device, a device identifier, ID, of each of the at least one second external electronic device, or an installation code comprising a security key used by the first external electronic device to onboard the at least one second external electronic device.

3. The electronic device of claim 2, wherein the installation data further comprises at least one of:
a package identifier, ID, to identify a package comprising the first external electronic device and the at least one second external electronic device,
a product model name of the package,
a device identifier, ID, of the first external electronic device,
a model name of the first external electronic device,
a model code of each of the at least one second external electronic device, or
a model name of each of the at least one second external electronic device.

4. The electronic device of claim 3, wherein the one or more computer programs further include computer-executable instructions that, when executed by the one or more processors individually or collectively, cause the electronic device to receive at least some of the installation data from the server or the first external electronic device, based on at least one of the serial number or the package ID of the first external electronic device.

5. The electronic device of claim 4, wherein the one or more computer programs further include computer-executable instructions that, when executed by the one or more processors individually or collectively, cause the electronic device to:
request the serial number of the first external electronic device from the server, based on a user account identifier, ID, and
receive the serial number of the first external electronic device from the server.

6. The electronic device of claim 4, wherein the one or more computer programs further include computer-executable instructions that, when executed by the one or more processors individually or collectively, cause the electronic device to obtain the serial number of the first external electronic device and/or at least some of the installation data, based on a machine-readable indicator of the first external electronic device.

7. The electronic device of claim 1, wherein the installation guide comprises a message guiding a user operation of configuring the at least one second external electronic device as a setup mode so that the at least one second external electronic device is connected to the first external electronic device.

8. The electronic device of claim 7, wherein the message comprises at least one of:
guide information requesting, for the at least one second external electronic device, to capture a machine-readable indicator of the at least one second external electronic device through a camera of the electronic device,
guide information requesting to press a designated button of the at least one second external electronic device,
guide information requesting to mount a battery to the at least one second external electronic device, or
guide information requesting to turn on power of the at least one second external electronic device.

9. The electronic device of claim 1, wherein the one or more computer programs further include computer-executable instructions that, when executed by the one or more processors individually or collectively, cause the electronic device to receive the installation guide from the server, based on the installation data.

10. The electronic device of claim 1, wherein the one or more computer programs further include computer-executable instructions that, when executed by the one or more processors individually or collectively, cause the electronic device to perform a second onboarding procedure for registering the at least one second external electronic device with the server, based on the installation data.

11. A method performed by an electronic device, the method comprising:
obtaining installation data required for a first external electronic device to register at least one second external electronic device with a server;
performing a first onboarding procedure for registering the first external electronic device with the server;
transmitting the installation data to the first external electronic device after performing the first onboarding procedure;
displaying an installation guide for onboarding the at least one second external electronic device, based on the installation data; and
receiving an onboarding result indicating that the at least one second external electronic device has been onboarded by the first external electronic device from the server.

12. The method according to claim 11, wherein the installation data comprises at least one of a serial number of the first external electronic device, a device identifier, ID, of each of the at least one second external electronic device, an installation code comprising a security key used by the first external electronic device to onboard the at least one second external electronic device, a package identifier (ID) to identify a package comprising the first external electronic device and the at least one second external electronic device, a product model name of the package, a device identifier (ID) of the first external electronic device, a model name of the first external electronic device, a model code of each of the at least one second external electronic device, or a model name of each of the at least one second external electronic device, and
wherein the method further comprises receiving the installation data from the server or the first external electronic device, based on at least one of the serial number or the package ID of the first external electronic device.

13. The method according to claim 12, further comprising:
requesting the serial number of the first external electronic device from the server, based on a user account identifier, ID, and
receiving the serial number of the first external electronic device from the server; or
obtaining the serial number of the first external electronic device from a machine-readable indicator of the first external electronic device.

14. The method according to one of claims 11 to 13,
wherein the installation guide comprises a message guiding a user operation of configuring the at least one second external electronic device as a setup mode so that the at least one second external electronic device is connected to the first external electronic device, and
wherein the message comprises at least one of:
guide information requesting, for the at least one second external electronic device, to capture a machine-readable indicator of the at least one second external electronic device through a camera of the electronic device,
guide information requesting to press a designated button of the at least one second external electronic device,
guide information requesting to mount a battery to the at least one second external electronic device, or
guide information requesting to turn on power of the at least one second external electronic device.

15. The method according to one of claims 11 to 14, further comprising:
receiving the installation guide from the server, based on the installation data; and/or
performing a second onboarding procedure for registering the at least one second external electronic device with the server, based on the installation data.

## Patentansprüche

1. Elektronische Vorrichtung, umfassend:
eine Kommunikationsschaltung;
Speicher, der ein oder mehrere Computerprogramme speichert; und
einen oder mehrere Prozessoren, die mit der Kommunikationsschaltung und dem Speicher kommunikativ gekoppelt sind,
wobei die ein oder mehreren Computerprogramme computerausführbare Anweisungen enthalten, die, wenn sie von dem einen oder den mehreren Prozessoren einzeln oder gemeinsam ausgeführt werden, die elektronische Vorrichtung veranlassen zum:
Erhalten von Installationsdaten, die für eine erste externe elektronische Vorrichtung erforderlich sind, um zumindest eine zweite externe elektronische Vorrichtung bei einem Server zu registrieren;
Durchführen eines ersten Onboarding-Vorgangs zum Registrieren der ersten externen elektronischen Vorrichtung bei dem Server über die Kommunikationsschaltung;
Senden der Installationsdaten an die erste externe elektronische Vorrichtung über die Kommunikationsschaltung nach Durchführen des ersten Onboarding-Vorgangs;
Anzeigen einer Installationsanleitung für das Onboarding der zumindest einen zweiten externen elektronischen Vorrichtung auf der Grundlage der Installationsdaten; und
Empfangen eines Onboarding-Ergebnisses, das anzeigt, dass das Onboarding der zumindest einen zweiten externen elektronischen Vorrichtung durch die erste externe elektronische Vorrichtung von dem Server über die Kommunikationsschaltung durchgeführt worden ist.

2. Elektronische Vorrichtung nach Anspruch 1, wobei die Installationsdaten zumindest eines von einer Seriennummer der ersten externen elektronischen Vorrichtung, einer Vorrichtungskennung, ID, von jeder der zumindest einen zweiten externen elektronischen Vorrichtung oder einem Installationscode, der einen Sicherheitsschlüssel umfasst, der von der ersten externen elektronischen Vorrichtung zum Onboarding der zumindest einen zweiten externen elektronischen Vorrichtung verwendet wird, umfassen.

3. Elektronische Vorrichtung nach Anspruch 2, wobei die Installationsdaten ferner zumindest eines von Folgendem umfassen:
eine Paketkennung, ID, zum Identifizieren eines Pakets, das die erste externe elektronische Vorrichtung und die zumindest eine zweite externe elektronische Vorrichtung umfasst,
einen Produktmodellnamen des Pakets,
eine Vorrichtungskennung, ID, der ersten externen elektronischen Vorrichtung,
einen Modellnamen der ersten externen elektronischen Vorrichtung,
einen Modellcode von jeder der zumindest einen zweiten externen elektronischen Vorrichtung, oder
einen Modellnamen von jeder der zumindest einen zweiten externen elektronischen Vorrichtung.

4. Elektronische Vorrichtung nach Anspruch 3, wobei die ein oder mehreren Computerprogramme ferner computerausführbare Anweisungen enthalten, die, wenn sie von dem einen oder den mehreren Prozessoren einzeln oder gemeinsam ausgeführt werden, die elektronische Vorrichtung veranlassen, zumindest einige der Installationsdaten von dem Server oder der ersten externen elektronischen Vorrichtung auf der Grundlage zumindest eines von der Seriennummer oder der Paket-ID der ersten externen elektronischen Vorrichtung zu empfangen.

5. Elektronische Vorrichtung nach Anspruch 4, wobei die ein oder mehreren Computerprogramme ferner computerausführbare Anweisungen enthalten, die, wenn sie von dem einen oder den mehreren Prozessoren einzeln oder gemeinsam ausgeführt werden, die elektronische Vorrichtung veranlassen zum:
Anfordern der Seriennummer der ersten externen elektronischen Vorrichtung von dem Server auf der Grundlage einer Benutzerkontokennung, ID, und
Empfangen der Seriennummer der ersten externen elektronischen Vorrichtung von dem Server.

6. Elektronische Vorrichtung nach Anspruch 4, wobei die ein oder mehreren Computerprogramme ferner computerausführbare Anweisungen enthalten, die, wenn sie von dem einen oder den mehreren Prozessoren einzeln oder gemeinsam ausgeführt werden, die elektronische Vorrichtung veranlassen, die Seriennummer der ersten externen elektronischen Vorrichtung und/oder zumindest einige der Installationsdaten auf der Grundlage einer maschinenlesbaren Kennzeichnung der ersten externen elektronischen Vorrichtung zu erhalten.

7. Elektronische Vorrichtung nach Anspruch 1, wobei die Installationsanleitung eine Nachricht umfasst, die eine Benutzeroperation zum Konfigurieren der zumindest einen zweiten externen elektronischen Vorrichtung als einen Einrichtungsmodus anleitet, so dass die zumindest eine zweite externe elektronische Vorrichtung mit der ersten externen elektronischen Vorrichtung verbunden wird.

8. Elektronische Vorrichtung nach Anspruch 7, wobei die Nachricht zumindest eines von Folgendem umfasst:
Anleitungsinformationen, die dazu auffordern, für die zumindest eine zweite externe elektronische Vorrichtung eine maschinenlesbare Kennzeichnung der zumindest einen zweiten externen elektronischen Vorrichtung durch eine Kamera der elektronischen Vorrichtung aufzunehmen,
Anleitungsinformationen, die dazu auffordern, eine vorbestimmte Taste der zumindest einen zweiten externen elektronischen Vorrichtung zu drücken,
Anleitungsinformationen, die dazu auffordern, eine Batterie an der zumindest einen zweiten externen elektronischen Vorrichtung anzubringen, oder
Anleitungsinformationen, die dazu auffordern, eine Stromversorgung der zumindest einen zweiten externen elektronischen Vorrichtung einzuschalten.

9. Elektronische Vorrichtung nach Anspruch 1, wobei die ein oder mehreren Computerprogramme ferner computerausführbare Anweisungen enthalten, die, wenn sie von dem einen oder den mehreren Prozessoren einzeln oder gemeinsam ausgeführt werden, die elektronische Vorrichtung veranlassen, die Installationsanleitung auf der Grundlage der Installationsdaten von dem Server zu empfangen.

10. Elektronische Vorrichtung nach Anspruch 1, wobei die ein oder mehreren Computerprogramme ferner computerausführbare Anweisungen enthalten, die, wenn sie von dem einen oder den mehreren Prozessoren einzeln oder gemeinsam ausgeführt werden, die elektronische Vorrichtung veranlassen, einen zweiten Onboarding-Vorgang zum Registrieren der zumindest einen zweiten externen elektronischen Vorrichtung bei dem Server auf der Grundlage der Installationsdaten durchzuführen.

11. Verfahren, das von einer elektronischen Vorrichtung durchgeführt wird, wobei das Verfahren Folgendes umfasst:
Erhalten von Installationsdaten, die für eine erste externe elektronische Vorrichtung erforderlich sind, um zumindest eine zweite externe elektronische Vorrichtung bei einem Server zu registrieren;
Durchführen eines ersten Onboarding-Vorgangs zum Registrieren der ersten externen elektronischen Vorrichtung bei dem Server;
Senden der Installationsdaten an die erste externe elektronische Vorrichtung nach dem Durchführen des ersten Onboarding-Vorgangs;
Anzeigen einer Installationsanleitung für das Onboarding der zumindest einen zweiten externen elektronischen Vorrichtung auf der Grundlage der Installationsdaten; und
Empfangen eines Onboarding-Ergebnisses, das anzeigt, dass das Onboarding der zumindest einen zweiten externen elektronischen Vorrichtung durch die erste externe elektronische Vorrichtung von dem Server durchgeführt worden ist.

12. Verfahren nach Anspruch 11, wobei die Installationsdaten zumindest eines von einer Seriennummer der ersten externen elektronischen Vorrichtung, einer Vorrichtungskennung, ID, von jeder der zumindest einen zweiten externen elektronischen Vorrichtung, einem Installationscode, der einen Sicherheitsschlüssel umfasst, der von der ersten externen elektronischen Vorrichtung zum Onboarding der zumindest einen zweiten externen elektronischen Vorrichtung verwendet wird, einer Paketkennung, ID, zum Identifizieren eines Pakets, das die erste externe elektronische Vorrichtung und die zumindest eine zweite externe elektronische Vorrichtung umfasst, einem Produktmodellnamen des Pakets, einer Vorrichtungskennung, ID, der ersten externen elektronischen Vorrichtung, einem Modellnamen der ersten externen elektronischen Vorrichtung, einem Modellcode von jeder der zumindest einen zweiten externen elektronischen Vorrichtung oder einem Modellnamen von jeder der zumindest einen zweiten externen elektronischen Vorrichtung umfassen, und
wobei das Verfahren ferner Empfangen der Installationsdaten von dem Server oder der ersten externen elektronischen Vorrichtung auf der Grundlage zumindest eines von der Seriennummer oder der Paket-ID der ersten externen elektronischen Vorrichtung umfasst.

13. Verfahren nach Anspruch 12, ferner umfassend:
Anfordern der Seriennummer der ersten externen elektronischen Vorrichtung von dem Server auf der Grundlage einer Benutzerkontokennung, ID, und
Empfangen der Seriennummer der ersten externen elektronischen Vorrichtung von dem Server; oder
Erhalten der Seriennummer der ersten externen elektronischen Vorrichtung von einer maschinenlesbaren Kennzeichnung der ersten externen elektronischen Vorrichtung.

14. Verfahren nach einem der Ansprüche 11 bis 13,
wobei die Installationsanleitung eine Nachricht umfasst, die eine Benutzeroperation zum Konfigurieren der zumindest einen zweiten externen elektronischen Vorrichtung in einen Einrichtungsmodus anleitet, so dass die zumindest eine zweite externe elektronische Vorrichtung mit der ersten externen elektronischen Vorrichtung verbunden wird, und
wobei die Nachricht zumindest eines von Folgendem umfasst:
Anleitungsinformationen, die dazu auffordern, für die zumindest eine zweite externe elektronische Vorrichtung eine maschinenlesbare Kennzeichnung der zumindest einen zweiten externen elektronischen Vorrichtung durch eine Kamera der elektronischen Vorrichtung aufzunehmen,
Anleitungsinformationen, die dazu auffordern, eine vorbestimmte Taste der zumindest einen zweiten externen elektronischen Vorrichtung zu drücken,
Anleitungsinformationen, die dazu auffordern, eine Batterie an der zumindest einen zweiten externen elektronischen Vorrichtung anzubringen, oder
Anleitungsinformationen, die dazu auffordern, eine Stromversorgung der zumindest einen zweiten externen elektronischen Vorrichtung einzuschalten.

15. Verfahren nach einem der Ansprüche 11 bis 14, ferner umfassend:
Empfangen der Installationsanleitung von dem Server auf der Grundlage der Installationsdaten; und/oder
Durchführen eines zweiten Onboarding-Vorgangs zum Registrieren der zumindest einen zweiten externen elektronischen Vorrichtung bei dem Server auf der Grundlage der Installationsdaten.

## Revendications

1. Dispositif électronique, comprenant :
un circuit de communication ;
des mémoires stockant un ou plusieurs programmes informatiques ; et
un ou plusieurs processeurs couplés de manière communicative au circuit de communication et à la mémoire,
dans lequel le ou les programmes informatiques incluent des instructions exécutables par ordinateur qui, lorsqu'elles sont exécutées par le ou les processeurs individuellement ou collectivement, amènent le dispositif électronique à :
obtenir des données d'installation requises pour un premier dispositif électronique externe à enregistrer au moins un second dispositif électronique externe auprès d'un serveur,
effectuer une première procédure d'accès pour enregistrer le premier dispositif électronique externe auprès du serveur via le circuit de communication,
transmettre les données d'installation au premier dispositif électronique externe via le circuit de communication après avoir effectué la première procédure d'accès,
afficher un guide d'installation pour accéder ledit au moins un second dispositif électronique externe, sur la base des données d'installation, et
recevoir un résultat d'accès indiquant que ledit au moins un second dispositif électronique externe a été accédé par le premier dispositif électronique externe depuis le serveur via le circuit de communication.

2. Dispositif électronique selon la revendication 1, dans lequel les données d'installation comprennent au moins un parmi un numéro de série du premier dispositif électronique externe, un identifiant, ID, de dispositif de chacun dudit au moins un second dispositif électronique externe, ou un code d'installation comprenant une clé de sécurité utilisée par le premier dispositif électronique externe pour accéder ledit au moins un second dispositif électronique externe.

3. Dispositif électronique selon la revendication 2, dans lequel les données d'installation comprennent en outre au moins un des suivants :
un identifiant, ID, de paquet, pour identifier un paquet comprenant le premier dispositif électronique externe et ledit au moins un second dispositif électronique externe,
un nom de modèle de produit du paquet,
un identifiant, ID, de dispositif du premier dispositif électronique externe,
un nom de modèle du premier dispositif électronique externe,
un code de modèle de chacun dudit au moins un second dispositif électronique externe, ou
un nom de modèle de chacun dudit au moins un second dispositif électronique externe.

4. Dispositif électronique selon la revendication 3, dans lequel le ou les programmes informatiques incluent en outre des instructions exécutables par ordinateur qui, lorsqu'elles sont exécutées par le ou les processeurs individuellement ou collectivement, amènent le dispositif électronique à recevoir au moins une partie des données d'installation depuis le serveur ou le premier dispositif électronique externe, sur la base d'au moins du numéro de série ou de l'ID de paquet du premier dispositif électronique externe.

5. Dispositif électronique selon la revendication 4, dans lequel le ou les programmes informatiques incluent en outre des instructions exécutables par ordinateur qui, lorsqu'elles sont exécutées par le ou les processeurs individuellement ou collectivement, amènent le dispositif électronique à :
requérir le numéro de série du premier dispositif électronique externe depuis le serveur, sur la base d'un identifiant, ID, de compte utilisateur, et
recevoir le numéro de série du premier dispositif électronique externe depuis le serveur.

6. Dispositif électronique selon la revendication 4, dans lequel le ou les programmes informatiques incluent en outre des instructions exécutables par ordinateur qui, lorsqu'elles sont exécutées par le ou les processeurs individuellement ou collectivement, amènent le dispositif électronique à obtenir le numéro de série du premier dispositif électronique externe et/ou au moins une partie des données d'installation, sur la base d'un indicateur lisible par machine du premier dispositif électronique externe.

7. Dispositif électronique selon la revendication 1, dans lequel le guide d'installation comprend un message guidant une opération utilisateur visant à configurer ledit au moins un second dispositif électronique externe en mode d'installation de sorte que ledit au moins un second dispositif électronique externe soit connecté au premier dispositif électronique externe.

8. Dispositif électronique selon la revendication 7, dans lequel le message comprend au moins un parmi :
des informations de guide requérant, pour ledit au moins un second dispositif électronique externe, de capturer un indicateur lisible par machine dudit au moins un second dispositif électronique externe via une caméra du dispositif électronique,
des informations de guide requérant d'appuyer sur un bouton désigné dudit au moins un second dispositif électronique externe,
des informations de guide requérant de monter une batterie dans ledit au moins un second dispositif électronique externe, ou
des informations de guide requérant de mettre ledit au moins un second dispositif électronique externe sous tension.

9. Dispositif électronique selon la revendication 1, dans lequel le ou les programmes informatiques incluent en outre des instructions exécutables par ordinateur qui, lorsqu'elles sont exécutées par le ou les processeurs individuellement ou collectivement, amènent le dispositif électronique à recevoir le guide d'installation depuis le serveur, sur la base des données d'installation.

10. Dispositif électronique selon la revendication 1, dans lequel le ou les programmes informatiques incluent en outre des instructions exécutables par ordinateur qui, lorsqu'elles sont exécutées par le ou les processeurs individuellement ou collectivement, amènent le dispositif électronique à effectuer une seconde procédure d'accès pour enregistrer ledit au moins un second dispositif électronique externe auprès du serveur, sur la base des données d'installation.

11. Procédé exécuté par un dispositif électronique, le procédé comprenant :
obtenir des données d'installation requises pour un premier dispositif électronique externe à enregistrer au moins un second dispositif électronique externe auprès d'un serveur ;
effectuer une première procédure d'accès pour enregistrer le premier dispositif électronique externe auprès du serveur ;
transmettre les données d'installation au premier dispositif électronique externe après avoir effectué la première procédure d'accès ;
afficher un guide d'installation pour accéder ledit au moins un second dispositif électronique externe, sur la base des données d'installation ; et
recevoir un résultat d'accès indiquant que ledit au moins un second dispositif électronique externe a été accédé par le premier dispositif électronique externe depuis le serveur.

12. Procédé selon la revendication 11, dans lequel les données d'installation comprennent au moins un parmi un numéro de série du premier dispositif électronique externe, un identifiant, ID, de dispositif de chacun dudit au moins un second dispositif électronique externe, un code d'installation comprenant une clé de sécurité utilisée par le premier dispositif électronique externe pour accéder ledit au moins un second dispositif électronique externe, un identifiant, ID, de paquet, pour identifier un paquet comprenant le premier dispositif électronique externe et ledit au moins un second dispositif électronique externe, un nom de modèle de produit du paquet, un identifiant, ID, de dispositif du premier dispositif électronique externe, un nom de modèle du premier dispositif électronique externe, un code de modèle de chacun dudit au moins un second dispositif électronique externe, ou un nom de modèle de chacun dudit au moins un second dispositif électronique externe et
dans lequel le procédé comprenant en outre : recevoir des données d'installation depuis le serveur ou le premier dispositif électronique externe, sur la base d'au moins du numéro de série ou de l'ID de paquet du premier dispositif électronique externe.

13. Procédé selon la revendication 12, comprenant en outre :
requérir le numéro de série du premier dispositif électronique externe depuis le serveur, sur la base d'un identifiant, ID, de compte utilisateur, et
recevoir le numéro de série du premier dispositif électronique externe depuis le serveur ; ou
obtenir le numéro de série du premier dispositif électronique externe depuis un indicateur lisible par machine du premier dispositif électronique externe.

14. Procédé selon l'une quelconque des revendications 11 à 13,
dans lequel le guide d'installation comprend un message guidant une opération utilisateur visant à configurer ledit au moins un second dispositif électronique externe en mode d'installation de sorte que ledit au moins un second dispositif électronique externe soit connecté au premier dispositif électronique externe, et
dans lequel le message comprend au moins l'un parmi :
des informations de guide requérant, pour ledit au moins un second dispositif électronique externe, de capturer un indicateur lisible par machine dudit au moins un second dispositif électronique externe via une caméra du dispositif électronique,
des informations de guide requérant d'appuyer sur un bouton désigné dudit au moins un second dispositif électronique externe,
des informations de guide requérant de monter une batterie dans ledit au moins un second dispositif électronique externe, ou
des informations de guide requérant de mettre ledit au moins un second dispositif électronique externe sous tension.

15. Procédé selon l'une quelconque des revendications 11 à 14, comprenant en outre :
recevoir le guide d'installation depuis le serveur, sur la base des données d'installation ; et/ou
effectuer une seconde procédure d'accès pour enregistrer ledit au moins un second dispositif électronique externe auprès du serveur, sur la base des données d'installation.
